# EUROPEAN PATENT SPECIFICATION

(11) **EP 4 482 661 B1**
(45) Date of publication and mention of the grant of the patent: **21.01.2026**
(21) Application number: 23707682.3
(22) Date of filing: 22.02.2023
(51) Int. Cl.: B27N 1/00, B27N 1/02, B27N 3/04

(54) **SYSTEMS AND METHODS FOR MAKING MOULDED PRODUCTS FROM CELLULOSE FIBRES**
SYSTEME UND VERFAHREN ZUR HERSTELLUNG FORMKÖRPER AUS CELLULOSEFASERN
SYSTÈMES ET PROCÉDÉS DE FABRICATION DE PRODUITS MOULÉS À PARTIR DE FIBRES DE CELLULOSE

(30) Priority: 22.02.2022 SE 2250239
(43) Date of publication of application: 01.01.2025
(73) Proprietor: Ekoligens AB, SE-506 32 Borås (SE)
(72) Inventor: STENBERG, Andreas, 431 46 MÖLNDAL (SE)
(74) Representative: Bjerkén Hynell KB
(86) International application number: PCT/EP2023/054483
(87) International publication number: WO 2023/161307

(56) References cited:
- CN-Y- 2 234 852
- DE-C1- 19 601 401
- SE-C2- 541 995
- US-A- 5 302 330
- US-A1- 2019 352 851

## Description

### Field of the invention

The present invention relates to systems and methods for making dry moulded products.

### Background of the invention

The use of pressure and heat to form dry moulded products out of blanks formed from a web of dry laid cellulose fibres has been used for many years. In recent years it has become more interesting to make moulded products out of such materials in order to replace moulded products made out of plastics. The dry moulded products have to be environmentally friendly (i.e., made of renewable products and able to be disposed of without harming the environment), non-toxic, and, particularly in fields where they replace plastics, have a smooth surface and be moisture tolerant. A first problem with such dry laid products is that the cellulose fibres in the blanks are only held together by mechanical intertwining of the constituent fibres before they are moulded and are easily torn. This means that special care has to be taken when moulding items in which the blank has to be folded or bent though angles which approach 90 degrees or through sharp bending radii which are in the order of a few millimetres. Typically, the moulds used in the process have to be specially formed and/or the shape of the final product compromised from its optimal shape in order to reduce the tearing forces exerted on the blank when the mould is being closed. A further problem with such products is that cellulose fibres from the blank may become attached to the mould surfaces during the moulding process and remain in the mould when the moulded product is ejected from the mould. This causes downtime while the mould is being cleaned, and waste as the moulded product will not be up to specification and will need to be scrapped. This problem can be reduced by carefully adjusting the moulding temperatures, pressures and times by trial and error, but this is time-consuming and needs to be performed for each new product and each time the composition of the cellulose web is changed significantly. Another problem with such methods is producing a surface on the moulded product which is moisture resistant (hydrophobic). Another problem with such methods is producing a surface on the moulded product which is resistant to oils, fats and greases (oleophobic). Another problem is how to provide a product which has a smooth surface, as frequently the surface of moulded products moulded from cellulose fibres are much rougher than those moulded from plastic. This may be because, unlike melted polymers used in plastic materials, the cellulose fibres do not bond together to form a homogenous mass but retain their individual characters. Often the untreated surfaces of cellulose fibre products, for example egg cartons made from cellulose fibres, have a coarse texture which is easily wetted and softens when exposed to water vapour or liquid water. This surface, when subjected to abrasion, may release fibres, parts of fibres or small particles of dust.

Clothes hanger bodies are an example of a moulded product made of plastic which may be suitable for replacement by a moulded product made of cellulose fibres. Current plastic clothes hangers have bodies with smooth surfaces and/or surfaces made to resemble wood. The market for moulded products such as clothes hangers is very large but, in order to fulfil the requirements of the users of the clothes hanger, a clothes hanger must be able to withstand the heat and humidity of being passed through a steam tunnel and must also not leave any dust or particles on the garment which it is carrying.

An additional problem is that unless the finished moulded product is coloured by the addition of pigment to the web before moulding, or printed or sprayed or otherwise decorated after moulding, the final moulded product has the same colour as the original cellulose fibres which may be undesirable.

SE541995C2 relates to a method for making moulded products from air laid cellulose fibres in which cellulose fibres which has been separated in a separating unit into detached cellulose fibres are used. In order to improve the mechanical properties of the finished moulded product, material property additives are added to, and mixed with, the fibres. These additives contribute to the mechanical or chemical properties of the product. The additives include traditional sizing agents used in the wet forming of paper, as well as starch and other additives which contribute to the mechanical and chemical properties of the final products. There is no teaching in this document on how to avoid the problems of tearing of the blank while entering a mould, how to prevent fibres of the formed product from adhering to the mould, nor how to provide the desired surface appearances mentioned above.

WO2021156222 relates to method for forming a cellulose product from an air-formed cellulose blank structure. In this method a mould is formed with tapered transition surfaces at the inlet opening in order to reduce the forces on the blank. This is said to reduce cracks, fibre separations, material fractures or unwanted structural weakening. This document also mentions another method for reducing these structural problems is to pre-form the blank before entering the final mould. Such methods do not prevent adhesion of the final product to the mould, nor do they provide the desired surface properties and appearances mentioned above.

US2019352851 relates to a method and system for producing a fibre mat suitable for use in the production of packaging board or fibrous construction elements. The method comprises the steps of low-water processing of fibrous source material in a airflow, forming a raw material including fibres and/or fibre bundles. Forming in the airflow a fibre mat having a spatial structure and consolidating the formed fibre mat to a specific volume greater than 1.6 cm³/g and a fibre mat thickness >= 1 mm.

US5302330 relates to a method for applying a release agent in the form of a foam onto a mass of wood material and binder during the production of chipboard.

DE19601401C1 relates to a process for the continuous production of chipboard or fibreboard from chips or fibres and impregnated with a NCO group-containing binder, which are formed into a mat and press-moulded in a heated press after precoating the press surfaces etc. with an external release agent. The release agent consists of an aqueous suspension containing 5-40 wt.% talcum as the sole active release agent, with no surface-active substances.

CN2234852Y relates to a wood fibre clothing hanger which is made of wood fiber (wood dust) which is hot-pressed by moulds. Coating layers at the four sides are made of veneer respectively and are matched with the external shape of the clothing hanger and the four sides of the clothing hanger are coated with the coating layers.

### Objects of the invention

The object of the present invention is to provide systems and methods for making improved moulded products made of pressed cellulose fibres,

### Brief description of the invention

The present invention relates to a system for producing a moulded product from dry laid cellulose fibre according to claim 1 and a method for producing a moulded product from dry laid cellulose fibre according to claim 5..

The systems and methods of the present invention are provided with preferably non-toxic, biodegradable moulding agents which improve the process efficiency by reducing waste caused during mould entry or mould exiting. Preferably moulded products made using said systems and methods have a surface which is not liable to release dust or small particles when lightly abraded. Preferably such products are also biodegradable. Preferably said moulded products have a visible surface which has a darker colour than the blank from which they are made. Preferably, the skin may be more temperature resistant, more moisture resistant and also better resist the absorption of oils, greases and fats (i.e. it is more oleophobic) than the raw material containing cellulose fibres which is used to form the moulded products.

Further advantages and advantageous features of the invention are disclosed in the following description and in the dependent claims.

In this document the term "blank" refers to a piece of material removed from a web or the like before it is formed in a mould. A blank may resemble a flattened-out version of the final product which it is intended to form after moulding.

In the following, in cases where the moulded product comprises a skin and a core, comparisons between the compositions and properties of the skin and core are those made on samples taken from the surface of the skin which are penetrating into the skin less than half the thickness of the skin. Samples from the core, whenever possible, are taken from the centre of the core, or within 1 mm of the centre of the core, and, wherever possible at least 1 mm from the visible transition, viewed by the unaided eye, between the skin and core. In cases where the moulded product comprises a skin but lacks a core i.e. the skins extends though the complete thickness of the product, comparisons between the compositions and properties of the skin and "core" are those made on samples taken from the surface of the skin and penetrating into the skin less than half the thickness of the skin and similar samples taken from an untreated moulded product made using the same raw material(s), process, and process parameters as the moulded product but without the use of moulding agents.

The core only contains bonded together cellulose fibres and substances originating from the raw material which formed the blank and lacks any residual solids of the moulding agent. Thus, the core has a different chemical composition to that of the skin.

In the event that moulding agents are only provided on one surface of the blank, then a cross section through the moulded product will show a skin and a core. In the case that moulding agents are provided on two opposing surfaces of a blank then a cross section through the moulded product will normally show a first skin, a core and a second skin., or a continuous skin if the cross section is too narrow for a core to remain.

### Description of the invention

In the following, embodiments of the invention will be described with reference to the drawings, in which:
Figure 1a) shows a flow chart of the steps of a first embodiment of a method according to the present invention for producing moulded products using the system of fig. 1b).
Figure 1b) shows schematically a first embodiment of a system for producing moulded products in accordance with the invention.
Figure 2a) shows a flow chart of the steps of a second embodiment of a method according to the present invention for producing moulded products using the system of fig. 2b).
Figure 2b) shows schematically a second embodiment of a system for producing moulded products in accordance with the invention.
Figure 3a) shows a schematic perspective view of a dry laid blank 21 for forming into a moulded product with a U-shaped profile produced by systems and methods in accordance with the present invention.
Figure 3b) shows a schematic perspective view of a moulded product with a U-shaped profile produced from the blank of figure 3a) by systems and methods in accordance with the present invention.
Figure 3c) shows a schematic cross section of the moulded product of figure 3b) along line B-B when the first major surface of the blank has been treated with a liquid moulding agent before moulding.
Figure 3d) shows a schematic cross section of the moulded product of figure 3b) along line B-B when the second major surface of the blank has been treated with a liquid moulding agent before moulding.
Figure 3e) shows a schematic cross section of the moulded product of figure 3b) along line B-B when the first and second major surfaces of the blank have been treated with a liquid moulding agent before moulding.
Figure 3f) shows a schematic cross section of the moulded product of figure 3b) along line B-B when all the surfaces of the blank have been treated with a liquid moulding agent before moulding.
Figures 4-10 show tables of experimental results,
Figures 11 shows a photograph with an oblique view from below of a clothes hanger body produced by systems and methods in accordance with the present invention.
Figure 12A shows a photograph of a portion of the clothes hanger body of figure 11.
Figure 12b) shows the same photograph as figure 12a) with the addition of lines highlighting features of the clothes hanger body.
Figures 13 -34 show photographs of examples of the moulded products resulting from some of the experiments.

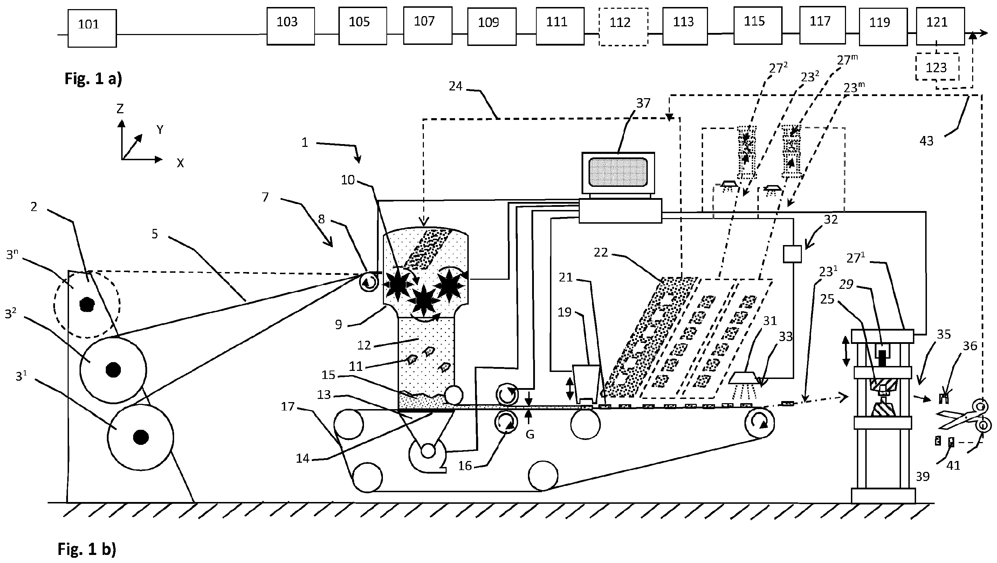

Figures 1a) and 1 b) relate to a first method and a first system 1 for producing moulded products in accordance with the first embodiment of the present invention. The system comprises a raw material supporting frame 2 for supporting one or more rolls 3¹- 3ⁿ of fibrous raw material 5, a raw material transport system 7 for transporting the fibrous raw material to a milling device 9 for converting the fibrous raw material into cellulose fibres 11 and possibly some cellulose fluff, a forming arrangement 13 for converting the cellulose fibres and any fluff into a dry laid web of fibres 15, a web transport system 17 for transporting the web of fibres to a blank forming machine 19 for forming from the web, and removing from the web, the blanks 21 intended to form the finished dry moulded product, optionally a scrap material recycling arrangement 24 for returning to the milling device 9 any unused web remaining after blanks have been formed and removed from the web, a blank transport system 23 for transporting blanks towards, and into, one or more, heated moulds 25 in a moulding device 27 comprising pressure-applying means 29 for applying pressure to the blanks 21 in the mould(s) 25 and said mould(s) 25, a moulding agent applying system 31 for applying a liquid moulding agent 33 from a supply 32 of liquid moulding agent to the blanks 21 before they enter the mould(s) or after they are placed in the mould but before the mould closes, a moulded product removing and transporting device 35 for removing moulded products 36 from the moulds, and a control system 37 for controlling the system for producing moulded products. Optionally a moulded product trimming system 41 may be arranged to remove excess moulded material 39 from the finished moulded product. This excess moulded material 39 may optionally be recycled by being returned to the milling device 9 via an excess mould material transport arrangement 43. Preferably each mould accepts a single blank removed from the web although it is conceivable that a mould may receive more than one blank. Furthermore, a mould may be arranged to produce more than one product from a single blank. Preferably there are two or three or four or more moulds arranged in a group in the moulding device. And these moulds can be closed and opened as a group so that a plurality of blanks can be formed into moulded products simultaneously in a single moulding device. Preferably there are a plurality of moulding device arranged and operated so that their moulding cycles are staggered, i.e. when one moulding device is being filled with blanks another moulding device is being closed and/or another moulding device is placing the moulds under pressure and/or another moulding device is being emptied of its moulded products.

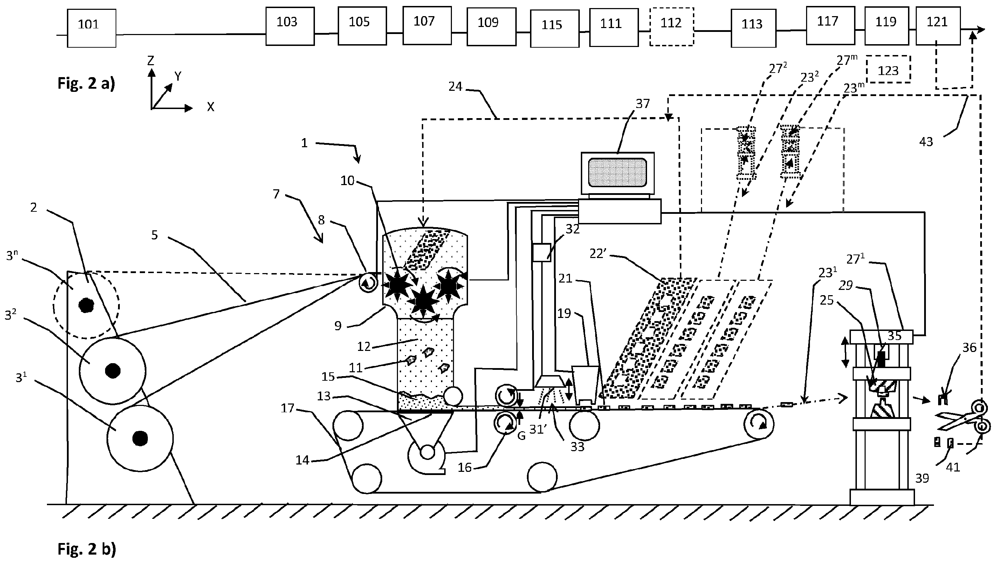

Figures 2a) and 2 b) relate to a second method and a second system 2 for producing moulded products in accordance with a second embodiment of the present invention. Features with the same reference numbers as used in figures 1a) and 1b) are the same as the corresponding features in those figures. This second embodiment of the invention differs from the first embodiment of the invention by the feature of the moulding agent applying system 31' for applying a liquid moulding agent 33 from a supply 32 of liquid moulding agent is positioned before blank forming machine 19. As a consequence, the liquid moulding agent is provided on the surface(s) of the complete web which are exposed to the liquid moulding agent. The positions across the width of the web where the liquid moulding agent is applied to the web can be adapted to the position of the blanks in the web so that liquid moulding agent is only applied to the surface of the web which is intended to be used for a blank, thus, for example, it may be unnecessary to apply liquid moulding agent at the edges fo the web.

The raw material supporting frame 2 can be of any conventional type comprising supports (not shown) from which one or more rolls 3¹ -3ⁿ of raw material can be suspended from. Preferably the rolls are arranged rotatably around a horizontal axis of rotation as this simplifies the loading of the rolls onto the supports.

Preferably the fibrous raw material 5 is in the form of one of more rolls of paper comprising cellulose fibres. Other forms of fibrous raw material are also conceivable including shredded materials, fluffed materials or strips or pads or bundles of material in which case the raw material supporting frame can be adapted accordingly. Preferably the cellulose fibres are at least 50 % virgin pulp fibres, more preferably 75 % virgin pulp fibres, even more preferably 90 % virgin pulp fibres and most preferably 100% virgin pulp fibres. The paper is preferably a kraft paper comprising property changing additives which change the properties of cellulose fibres in order to make moulded products made from the cellulose fibres more suitable for their final use. The additives may include sizing agent(s) and other property changing additives such as binding agents, pigments, biocides and fillers. Some additives contribute to give the paper hydrophobic properties and these hydrophobic properties are retained by the moulded product and allow it to resist moisture, for example, when exposed to a steam tunnel. If it is desired to give the final moulded product a colour which resembles the colour of wood, the cellulose fibres may be unbleached and colour may be imparted to the final moulded product by the choice of process parameters and moulding agents described in the following. The sizing agents may provide up to 3% by weight of the content of the paper, the remaining content being cellulose fibres, pH adjustment substances and impurities from the papermaking process and moisture.

In the following, all COBB values relate to those determined by the TAPPI T 441 standard for nonbibulous paper and the TAPPI T 432 standard for bibulous paper that were current on January 1, 2022. To provide high moisture resistance in the moulded product, preferably the fibrous raw material has a COBB value equal to or less than 70 g/m², more preferably equal to or less than 50 g/m², even more preferably equal to or less than 30 g/m², yet more preferably equal to or less than 20 g/m² and most preferably equal to or less than 10 g/m².

To be able to produce a moulded product which is durable and abrasion resistant, preferably a non-peelable skin can be formed on the surface of the moulded product, the skin being formed of cellulose fibres from the blank used to form the product which fibres were contacted by a liquid moulding agent before the product was formed and which are integrally joined with the core of the product to form a unitary product. In this context, non-peelable means that if a section of the skin is detached at one end from the core and pulled away from the core, then the section of skin tends to break at the interface with the core and more skin does not peel away from the core - the skin breaks off without substantially increasing in length. The skin comprises celluloses fibres from the blank and residual solids or traces of the components from the liquid moulding agent. Such a non-peelable skin cannot be peeled from the core as a separate, distinct structure as the strength of the bonds between the fibres of the core and the adjacent fibres of the skin are substantially the same as the bonds between fibres in the skin and are substantially the same as the bonds between fibres in the core. If attempts are made to peel the skin from the core this causes the skin to break and leave residual fibres on the core and/or vice versa.

A skin can be formed by applying a liquid moulding agent to the surface of the material that is to be moulded, i.e. the web or the blank of cellulose fibres, preferably before entering the mould, which liquid moulding agent can penetrate into the web used to form the final product and come into contact the cellulose fibres near to the surface of the web. In such cases it can be preferable that the COBB value of the raw material is not too low. To provide adequate penetration of the moulding agent in the blank/web, preferably the fibrous raw material has a COBB value equal to or greater than 10 g/m², more preferably equal to or greater than 20 g/m².

A good compromise between high water resistance and the possibility to form a skin which is up to two millimetres thick is found when the COBB value of the raw material is equal to or greater than 15 g/m² and less than or equal to 25 g/m².

A preferred composition of paper used as fibrous raw material comprises by weight the following components:
Pulp: preferably unbleached sulphate pulp and preferably virgin fibre pulp, less than or equal to 95.00 % and greater than or equal to 90.00 %, more preferably greater than or equal to 92.00 % and equal to or less than 93.00 %, even more preferably equal to or greater than 92.50 % and equal to or less than 92.80 %.
Water: preferably equal to or less than 8 % and greater than or equal to 4%, more preferably equal to or greater than 5% and less than or equal to 7%, or even more preferably greater than or equal to 5.75 % and equal to or less than 6.25 %.

Residual impurities from the papermaking process or further additives such as starch, talc, etc.: preferably less than or equal to 1.5 %, more preferably less than or equal to 1.2 %, even more preferably less than or equal to 1.1 %, yet more preferably less than or equal to 0.5 % and most preferably only in trace amounts or less.

Biocides such as Dimethylethanolamine-epichlorohydrin polymer, 5-chlor-2-metyl-2H-isotiazol-3-one and 2-metyl-2H-isotiazol-3-one or the like: preferably equal to or greater than 0.00 % and less than or equal to 1.00 %, or more preferably equal to or less than 0.50 %, or even more preferably equal to or less than 0.40 %, or yet more preferably equal to or less than 0.30 %, or even more preferably equal to or less than 0.20 %, or most preferably equal to or less than 0.10 %.

Sizing agent and pH adjustment agents: preferably equal to or greater than 0.00 % and less than or equal to 5.00 %, more preferably equal to or greater than 0.25% and less than or equal to 2.50%, even more preferably equal to or greater than 1.00 % and equal to or less than 1.40%, yet more preferably greater than or equal to 1.20 % and less than or equal to 1.30 %, wherein the sizing agents and pH-adjustment agents preferably comprise:
i) Aluminium sulphate: preferably equal to or greater than 0.00 % and less than or equal to 1.00 %, or more preferably equal to or less than 0.50%, or more preferably equal to or less than 0.10 %, or even more preferably equal to or less than 0.05 %, or most preferably equal to or less than 0.04 % and equal to or less than 0.03%; and/or,
fumarated rosin: preferably equal to or greater than 0.00 % and less than or equal to 1.00 %, or more preferably equal to or less than 0.50 %, or even more preferably equal to or less than 0.40 %, or yet more preferably equal to or less than 0.30 %, or most preferably equal to or less than 0.20%.
ii) Sulphuric acid: preferably equal to or greater than 0.00 % and less than or equal to 0.10 %, or more preferably equal to or less than 0.05 %, or equal to or less than 0.04 %, or even more preferably equal to or less than 0.03 %, or equal to or less than 0.02%, or most preferably equal to or less than 0.01%.
ii) Alum - Aluminum sulphate tetradecahydrate (CAS-no.16828-12-9): preferably less than or equal to 2.5 % and greater than or equal to 0.00 %, more preferably less than or equal to 1.5 % and greater than or equal to 0.50 %, yet more preferably less than or equal to 1.1 %, and greater than or equal to 0.90 %.

Preferably, the composition of the paper used as fibrous raw material is adjusted so that it has a COBB value below 70 g/m². For general use, to form a product with a good water resistance which still retains the ability to absorb a quantity of moulding agent, a nominal COBB value of 20 g/m² (+ or - 5 g/m²) is preferred.

Preferably a paper used as a raw material has a weight of from 50 to 800 g/m², more preferably from 1500 to 450 g/m². Lower weights are difficult to feed without breaking due to their relative weakness, while higher weights are difficult to handle due to their increased rigidity.

A preferred example of a kraft paper for use in the present invention comprises, by weight: water 6 %, aluminium sulphate 0.03 %, Dimethylethanolamine-epichlorohydrin polymer 0.03 %, fumarated rosin 0.20 %, sulphuric acid 0.01 %, alum: aluminium sulphate tetradecahydrate 1.00 %, the remainder being unbleached sulphate pulp. It has a COBB value of 20 g/m² (+ or - 5 g/m²).

Another preferred example of a paper for use in the present invention comprises, by weight:
water 6%, talc 0.35 %, chlorite 0.06%, calcium carbonate and calcium magnesium carbonate together 0.04 %, alum 2.25, aluminium sulphate 0.03 %, fumarated rosin 0.06 %, starch 0.25 %, the remainder being unbleached sulphate pulp. It has a COBB value of 20 g/m² (+ or - 5 g/m²).

Another example of a preferred paper for use in the present invention comprises, by weight:
water 7 %, alum 0.90%, aluminium sulphate 0.05 %, fumarated rosin 0.13 %, starch 0.33 %, the remainder being unbleached sulphate pulp. It has a COBB value of 20 g/m² (+ or - 5 g/m²).

Using such a paper in which property changing additives are homogeneously distributed in the paper used as the fibrous raw material for the process gives the advantage that no separate supply and control system is needed for the property changing additives as these are already present in the paper. A further advantage is that the chemical composition of the web formed from the compacted separated fibres is the same as that of the original fibrous raw material entering the milling device, thereby simplifying the incorporation into the production process of unused web which is recycled before it has been subjected to a liquid moulding agent. Such unused web can be simply reintroduced into the milling device along with, or instead of, the raw material as it will not change the chemical composition of the material in the milling device.

Furthermore, the moulded products are as safe to use and to dispose of as paper is, and thus do not require any special handling.

The fibrous raw material transport system 7 can be any conventional system for transporting material. In this example where the fibrous raw material is provided from rolls of paper, i.e. the raw material is a web of material, it may comprise one or more driven feed rollers 8 which are in contact with the web(s) of raw material and which by means of friction between the feed roller(s) and web drive the web into the inlet 10 of milling device 9. In some applications the concentration of additives in the preferred web used as fibrous raw material may be unsuitable for the final moulded product and it may be necessary to dilute or increase the concentration of additives in the web. This can be achieved by providing one of more rolls or sheets (fed from a sheet-feeding arrangement, not shown in the figures) or the like, or bundles, of a second, preferably fibrous, raw material with a lower, respectively higher, concentration of additives in addition to the roll(s) of preferred raw material being fed to the milling device. This second raw material could include additives or consist of additives which are not found in the first fibrous raw material, for example flame retardants or pigments or oleophobic substances. The simultaneously feeding of one or more rolls of the preferred fibrous raw material and one or more other supplies of a second (or third or more) fibrous raw material to the milling device allows the composition and weight per square metre of the subsequently formed web to be quickly and easily changed by adding or stopping the feed of fibrous raw material from one or more of these rolls/supplies to the milling device. For example, if the concentration of an additive in the final moulded product is intended to be 2% and the concentration of this additive in the preferred raw material is 10%, then the concentration of the additive can be reduced by supplying fours rolls of paper of weight X g/m² of the preferred material at speed Y m/s and one roll of a second fibrous raw material with 0% of the additive of the same paper weight X g/m² and at the same speed Y m/s.

The milling device 9 can be any device, such as a disc mill 10 or a hammer mill 10 or shredder or the like, which is suitable for breaking up the web(s)/supplies of fibrous raw material into separated cellulose fibres 12. In the milling device some of the cellulose fibres may spontaneously collect into a cellulose fluff 11.

The cellulose fibres 12 and any cellulose fluff 11 are sucked from the milling device into a forming arrangement 13. This may comprise a vacuum table 14 which pulls the fluff and fibres onto a web transport system 17 comprising an endless, microperforated belt 16 which the fluff and fibres collect onto and form a web 15. The endless belt moves the web towards the following process steps in the longitudinal direction of the belt which is known as the machine direction - "MD". This corresponds to the X-axis of the resulting web and blanks. The Y-axis of the web extends perpendicular to the X-direction across the web and is known as the cross direct - "CD". The suction causes the fluff and fibres to intermingle and form the web of fibres 15 with a thickness which extends in the Z-direction perpendicular to the X-axis and the Y-axis. The density of the web 15 can be in the range of hundreds of grams per square metre for thin-walled products or areas of the product which are not subjected to stretching during the moulding process, or several thousand grams per square metre for products which will have walls which are several mm thick or which have parts formed from areas of the web which are subject to stretching during moulding.

In a preferred embodiment of a forming arrangement, differential fibre distribution means are arranged in the cross direction CD of the web of the forming arrangement to form a web with different densities in the cross direction of the web. This corresponds to the Y-axis of the resulting web and blanks.

For example, the vacuum table may be divided into a plurality of channels arranged side by side in the transverse direction of the vacuum table and each channel can be connected to a different level of suction. This means that different suction forces can be obtained in the different channels which can influence the amount of fluff and fibres collecting on the belt above each channel. Channels with a higher level of suction will collect more fluff and fibres on the belt passing over them compared to channels with a lower level of suction. This results in a thicker (in the Z-direction) and/or denser web, e.g., 3000 g/m², over the channels with higher suction when compared against the thickness/density, e.g., 2000 g/m², of the web over the channels with a lower suction. When a thick web is subsequently compressed it will have a higher density than a thinner web compressed by the same force. Differential web densities may also be achieved by providing scrapers which provide gaps of different height between the belt and the scraper and which can be used to limit the thickness of the web in predetermined transverse (CD) positions of the belt, and/or some shields may be provided which cover some areas of the surface of the belt exposed to the vacuum table in order to prevent fibres being drawn onto the areas of the belt shielded by the shields - thereby reducing the area available to collect fibres which leads to a lower web density or thickness in the web formed after passing those areas. Such shields could be, for example, arranged above the surface of the belt exposed to the fibres or between the belt and suction table. Preferably, no additives are added to the materials in the milling device and the forming arrangement so that the chemical composition of the web leaving the forming arrangement is identical to that of the combination of fibrous material(s) entering the milling device.

The web from the forming arrangement is compacted to a desired thickness in a compacting device comprising one or more rolls 16 as it is transported on the transport system away from the forming arrangement in the direction of the moulding arrangement. Such rolls may be arranged to form a constant gap between them in the cross direction of the web to provide different thicknesses to the web. Alternatively, the rolls may be provided with profiles in the cross direction (Y-direction) which have peaks and troughs which form different cross-sectional profiles in the web.

In the system and method according to the first embodiment of the present invention the compacted web is moved to the blank forming machine 19. The blank forming machine can be any conventional stamping or cutting device which stamps or cuts blanks 21 in the web 15 so that these blanks 21 intended to form the finished moulded product can be separated from the web. Unused web 22 is preferably returned to an inlet of the milling device and thereby recycled. As the unused web 22 has the same composition as the fibres and fluff in the milling device, the composition of the web formed after the introduction of this recycled web into the milling device is substantially unchanged.

In the first embodiment of the invention, the system comprises one or more blank transport systems 23¹-23^{m} for transporting blanks 21 from the blank forming machine towards, and into, one or more, heated moulds 25 in one or more moulding devices 27¹-27^{m}. Each moulding device comprises pressure-applying means 29 and said mould(s) 25. A moulding agent applying system 31 for applying a liquid moulding agent 33 from a supply 32 of liquid moulding agent to the blanks, before they enter the mould and/or while they are in the mould but before the mould is closed, is positioned before the mould(s) - this may be part of the blank transporting system or may be part of the moulding device. A moulded product removing and transporting device 35 is arranged near the mould(s) for removing moulded products 36 from the moulds. Optionally, any excess moulded material can be trimmed from the moulded product by moulded product trimming system 41. This excess moulded material 39 may optionally be recycled by being returned to the milling device 9 via excess moulded material transport arrangement 43. This excess material has substantially the same chemical composition as the web leaving the forming arrangement - the only possible difference being a small amount of the moulding agent 33 that was applied to the surface(s) of the blank before moulding. Thus, when any excess moulded material is added as a further source of fibrous raw material to the milling device for recycling, the chemical composition of the web leaving the forming arrangement is identical to the combined chemical composition of the fibrous raw material and any excess mouldered material entering the milling device.

The provision of a plurality of blank transporting systems and moulding devices operating in parallel permits the system to be easily scaled up and allows redundancy in capacity. If, for example, the rate of production of the web is doubled in the forming device then it is easy to double the number of the blank transporting and/or moulding devices and/or add extra moulds to the moulding device to double the moulding capacity of the system. In the prior art systems in which the material is processed in a serial manner, the speed of the system was limited by the speed of the slowest process step in the system, and it was complicated to increase moulded production rates. The use in the present invention of a plurality of moulding pathways for the blanks diminishes this problem.

In the second embodiment of the invention, the liquid moulding agent can be applied to the web 15 by a moulding agent applying system 31' before the blanks 21 are formed. Thus, as shown in figures 2a) and 2b), after the web leaves the forming arrangement, a liquid moulding agent is applied to the surface(s) of the web before the web 15 reaches the blank forming machine. The surface treated web 22' is then moved to the blank forming machine, blanks are formed and then fed to the mould without further application of any moulding agent. Unused surface-treated web 22' is preferably returned to an inlet of the milling device as a further fibrous raw material and thereby recycled.

When any recycled surface-treated web is added as a fibrous raw material to the milling device, the chemical composition of the web leaving the forming arrangement will be determined by, and identical, to the chemical composition of the fibrous raw material(s) entering the milling device. This unused surface treated web 22' has been treated with a liquid moulding agent which will leave residual traces of any solid components of the liquid moulding agent on the surface-treated unused web once the solvent in the liquid moulding agent has evaporated. Preferably the amount of solid component in the liquid moulding agent which remains on the web or blank is less than 1% of the weight of the web to which it is being applied, which means that the composition of the surface-treated web after evaporation of the solvent is 1 part solid component of the moulding agent and 100 parts raw material which is 100/101 = about 99% the same as the web leaving the milling device. This means that this surface-treated unused web can be introduced into the milling device without substantially changing the composition of the web compared to when only raw material is introduced into the milling device. For example, if in an extreme case, 20 % of the web that has been surface treated is returned to the milling device and it contains one part solid component of the moulding agent and one hundred parts raw material, then if four times the amount of raw material is added to it in the milling device, the material leaving the milling device will contain 80% raw material, 20 % recycled surface-treated excess web and thus will contain less than 0.2% solid component of the moulding agent. While repeated recycling of unused surface treated web will slowly compound the amount of moulding agent solid component in the web, in practice, the requirements for maintaining and cleaning the machine will mean that the level of solid component of the moulding agent in the web leaving the milling device will be negligible when compared to the other additives already in the raw material and no changes will need to be made in the operating conditions to take account of it.

A control system 37, preferably a digitally implemented control system, is arranged and adapted to control the system for producing moulded products.

As shown in figure 1a) the method according to the first embodiment of the present invention comprises the following steps in order:
101 providing a fibrous raw material, preferably in the form of rolls of paper.
103 transporting and feeding said fibrous raw material into a milling device.
105 converting said fibrous raw material into cellulose fibres and/or fluff in said milling device.
107 dry laying the cellulous fibres and/or fluff into a web of fibres.
109 transporting the web of fibres through a press roll system to compact the web.
111 forming blanks from said web of fibres.
112 optionally returning unused web to the milling device as a further fibrous raw material.
113 transporting the blanks towards one or more moulding devices.
115 providing a liquid moulding agent and applying the liquid moulding agent onto the blanks.
117 transporting the liquid treated blanks into a moulding device.
119 Applying heat and pressure to the blank inside the moulding device for a predetermined period of time in order to form a moulded product.
121 ejecting the formed moulded product from the mould in the moulding device, optionally trimming the moulded product and optionally returning any waste moulded material to the milling device.

The steps are preferably controlled by the control system 37.

As shown in figure 2a) the method according to the second embodiment of the present invention comprises the following steps in order:
101 providing a fibrous raw material, preferably in the form of rolls of paper.
103 transporting and feeding said fibrous raw material into a milling device.
105 converting said fibrous raw material into cellulose fibres and/or fluff in said milling device.
107 dry laying the cellulous fibres and/or fluff into a web of fibres.
109 transporting the web of fibres through a press roll system to compact the web.
115' providing a liquid moulding agent and applying a liquid moulding agent onto the web.
111 forming blanks from said web of fibres.
112 optionally returning unused web to the milling device as a further fibrous raw material.
113 transporting the blanks towards one or more moulding devices.
117 transporting the blanks into a moulding device.
119 Applying heat and pressure to the blank inside the moulding device for a predetermined period of time in order to form a moulded product.
121 ejecting the formed moulded product from the mould in the moulding device, optionally trimming the moulded product and
123 optionally returning any waste moulded material to the milling device.

The steps are preferably controlled by the control system 37.

Step 101 comprises providing the fibrous raw material, preferably in the form of one or a plurality of rolls, preferably rolls of paper each comprising a continuous web of paper of the composition described above. As long as the same raw materials are provided at the same rate during a run of the system, reusing scrap or excess web is simplified as it has substantially the same, i.e., 99% or more the same, composition as the fibrous raw material provided from the rolls of fibrous raw material entering the milling device. When rolls of paper are used as raw material, the rolls may be suspended on supports which allow the rolls to rotate. In order to provide manufacturing flexibility, it is preferable to use more than one roll of paper as this allows the user to increase the amount of materials, or the composition of the materials being supplied to the system quickly and easily by adding or removing rolls of raw material to or from the transport path to the system.

Preferably step 103 comprising feeding the end of the web of fibrous raw material on a roll to a feeding device such as a rotating roll or set of rollers which grip the web and feeds it into the inlet of a milling device.

Step 105 comprises using the milling device to breakdown the fibrous raw material into its constituent fibres, some of which may interlock to form a cellulose fluff.

In step 107 the fibres and any cellulose fluff are pulled by an airflow, produced by a vacuum chamber below a transport belt and/or a fan arrangement above the belt, onto the transport belt where they become entangled with each other and form a fluffy dry laid cellulose web. Preferably, no additives are added to the raw material in the milling device or forming arrangement.

Step 109 comprises the step of transporting the web of fibres on the transfer belt through a press roll system with a predetermined gap of height G between the press rolls, thereby compacting the web which increases its rigidity and makes it easier to handle. As mentioned above, the height G may vary in the cross direction of the web.

In step 111 a blank forming device, such as a stamping device, stamps the web and cuts blanks from the web. Excess material is removed from the transport belt and can be returned directly to the milling device. The blanks may be transported directly to the next step of the process on the same transport belt or, as shown in dashed lines in figure 1b), be moved onto, and stored temporarily on, transport units which can be transported in parallel to further stages of the system. This means that a single web can be used to provide blanks to more than one moulding device. This means that one moulding device can be running through its pressing cycle while one or more other moulding devices are being charged with the blanks necessary to permit them to start their pressing cycle, thereby allowing simple scaling up of the system. For example, if milling capacity and web forming capacity and the transport belt can deliver the web at a speed of 0.1 metre per second and thereby produce 10 blanks each of which are 9 centimetres long, then it is theoretically possible to produce 60 blanks per minute. If a moulding device contains 10 moulds, then if it has a cycle time of one minute it can only produce 10 moulded products per minute. This will limit the moulded production capacity to only 10 moulded products per minute while it is theoretically possible to produce 60 moulded products per minute. This theoretical rate of 60 moulded products per minute can be achieved in practice by providing 6 moulding devices, each with 10 moulds, which are operated in turn at 6 second intervals after being loaded with 10 blanks.

In optional step 112 the excess unused web remaining after blanks have been formed in the web is fed into the milling device. As no additional substances such as additives have been added to the web at this stage, the excess web can be re-introduced into the system without changing the proportions of additives in, and the chemical composition of, the subsequently laid web.

In step 113 the blanks are transported towards a moulding device.

In the first embodiment of the invention, in step 115 in order to provide the moulded product 36 with an abrasion resistant and/or humidity resistant and/or coloured and/or smoother outer surface, at least one surface of the blank 21 is wetted by a shower or sprinkling system 31 arranged above and/or below the transport system such that a liquid moulding agent can be applied onto the blanks as they pass by the shower or sprinkling system on their way to the moulding devices. Alternatively, a blank 21 can be wetted by being immersed in a pool of liquid moulding agent or by being rolled by one or more rollers which are wetted with liquid moulding agent, or the like (not shown in the figures).

In the second embodiment of the invention, in step 115' in order to provide the moulded product 36 with an abrasion resistant and/or humidity resistant and/or coloured and/or smoother outer surface, at least one surface of the web is wetted by a shower or sprinkling system 31' arranged above and/or below the transport system such that a liquid moulding agent can be applied onto the web as it passes by the shower or sprinkling system on their way to the moulding devices. Alternatively, the web can be wetted by being immersed in a pool of liquid moulding agent or by a roller or the like (not shown in the figures).

Preferably, the liquid moulding agent consists of an aqueous solution:
a) with one or more mould entry aiding agents with lubricating properties to aid mould entry of the blanks and thereby prevent tearing, folding, misshaping or other damage to the blanks; and/or,
ii) with one or more mould release agents with mould release properties which prevent the surface of the moulded product from sticking to the surface of the mould and/or
iii) with one or more moisture-resistance and/or oil-resistance enhancing agents.

When the moulded product is formed from a blank which is not subjected to significant tearing or folding stresses during moulding then a dedicated mould entry aiding agent may not be necessary as the mould release agent may provide sufficient lubrication to avoid the need for an additional agent to aid mould entry.

When the moulded product is formed from a blank which does not tend to stick to the mould walls during the pressing operation during moulding then a dedicated mould release agent may not be necessary as the mould entry aiding agent may enable the formation of a skin on the moulded product which avoids the need for an additional agent to aid mould release.

One example of a liquid moulding agent is an aqueous solution containing soap. Soap can act as a mould entry aiding agent which helps to lubricate the blank as it is inserted into a mould and may also contribute to darkening the surfaces of the moulded product to which it is applied. It may also act as a mould release agent as the residual soap products remaining after the blank has been moulded may also contribute to releasing the moulded product from the mould and thereby remove the need of a further mould release agent. Soap is a low hazard product which does not require any special handling precautions. Preferably, to reduce environmental impacts and facilitate recycling of the moulded products, the soap is a plant-based soap, based on oils or tars or the like from plants.

The concentration of liquid moulding agent applied should be adjusted so, by weight, the dissolved solids (which may result in solid residuals in the moulded product) of the liquid moulding agent are preferably equal to or less than 1.0%, more preferably less than or equal to 0.5 % and even more preferably less than 0.1% of the liquid moulding agent.

An example of an aqueous solution suitable as a mould entry aiding and mould release agent is a green soap solution. Green soap is a standard cleaning product available as a liquid comprising water, 5-15 % soap as the active cleaning ingredient, and, optionally, other components such a perfume which are not necessary for the purposes of the current invention, but which do not adversely influence the function of the liquid moulding agent. Preferably the liquid moulding agent comprises an aqueous green soap solution which has been diluted with water before application to the web or blank. The undiluted green soap solution comprises an amount by weight of green soap equal to or greater than 0.01 % and or equal to or less than 25.0 %, more preferably an amount by weight of green soap equal to or greater than 0.1 % and or equal to or less than 20 %, even more preferably an amount by weight of green soap equal to or greater than 1.0 % and or equal to or less than 17.5 % and most preferably an amount by weight of green soap equal to or greater than 5.0% and or equal to or less than 15.0 %. An example of a suitable soap solution is "Green soap" from Jula AB, Box 363, 532 24 Skara, Sweden, product number 003324, available in January 2022 with the following ingredients:
Aqua
Potassium tallate
Potassium hydroxide
Perfume
Trisodium 5-hydroxy-1-(4-sulphophenyl)-4-(4-sulphophenylazo)pyrazole-3-carboxylate Benzene-methanaminium, N-ethyl-N-(4-((4-(ethyl((3-sulfophenyl)methyl)amino) phenyl)(2-sulfophenyl)methylene)-2,5-cyclohexadien-1-ylidene)-3-sulfo-, hydroxide, inner salt, disodium salt Sodium chloride,
of which 5-15% by weight of the solution is green soap and >5% is perfume, the remainder being water.

This soap solution is preferably diluted with water to form a diluted green soap solution which can be used as a liquid moulding agent. When the green soap solution comprises 10 % green soap by weight, it can be further diluted with water at a ratio preferably between 1 part of the green soap solution to 100 parts water and 30 parts green soap solution to 100 parts water, more preferably between 12 and 20 parts green soap solution to 100 parts water, and most preferably 3 to 10 parts green soap solution to 100 parts water.

Liquid moulding agent solution is applied at a rate on average across the cross direction of the blank which is greater than or equal to 100 grams per square metres (g/m²) of web and equal to or less than 400 g/m² of web, preferably which is greater than or equal to 120 g/m² of web and equal to or less than 300 g/m² of web, even more preferably which is greater than or equal to 150g/m² of web and equal to or less than 250 g/m² of web.

Preferably ambient conditions of 20-21° C and 55%-65% relative humidity are maintained at the liquid moulding agent application device to control the evaporation of the applied liquid moulding agent. Less liquid moulding agent may be needed to be applied to blanks if the ambient humidity is higher or the ambient temperature is lower and the rate of evaporation of the applied liquid moulding agent decreases. More liquid moulding agent may be needed to be applied to blanks if the ambient humidity is lower or the ambient temperature is higher and the rate of evaporation of the applied liquid moulding agent increases.

A liquid moulding agent with mould release properties and which may contribute to increasing the water-repellent properties of the treated surface is manufactured by the company OrganoClick AB of Linjalvägen 9, SE 187 66 Täby, Sweden which sells a biodegradable, non-toxic, free from fluorocarbons and isocyanates, aqueous solution for improving the water repellent properties of fabrics under the trademark OC-aquasil^{™} Tex 403 (called "Aquasil" in the following). On 23 February 2017 the composition of the moulded product was given as: organic silicon prepolymer from 1% to less than 5 %, 2-(2-butooxyethoxy)ethanol greater than 0% and <1%, and Zirconium acetate from 1 to 3%, the remainder being water. Although it is not specified as being suitable for such use, the applicants have found that this product is suitable for as a mould release agent for the treatment of a cellulose fibre web in order to enhance its mould release properties.

When supplied as a solution with the average concentrations of the three ingredients organic silicon prepolymer, 2-(2-butooxyethoxy)ethanol and Zirconium acetate mentioned above, the water repellent property enhancing solution can be diluted with water to form a diluted aqueous solution which can be used as a liquid moulding agent at a ratio, by volume, preferably between 1 part and 8 parts undiluted solution to 100 parts water, more preferably 2 to 6 parts undiluted solution to 100 parts water and most preferably from 3 to 5 parts undiluted solution to 100 parts water. The liquid moulding agent solution for aiding mould release of the moulded product is applied at a rate on average across the cross direction of the blank which preferably is greater than or equal to 10 g/m² of web and equal to or less than 400 g/m² of web, more preferably which is greater than or equal to 20 g/m² of web and equal to or less than 300 g/m² of web, even more preferably which is greater than or equal to 50 g/m² of web and equal to or less than 200 g/m² of web at ambient conditions of 20-21° C and 60% relative humidity.

A preferred liquid moulding agent consists of an aqueous solution with mould entry aiding properties and mould release properties. Preferably this moulding agent consists of, by weight, dissolved solids which are preferably equal to or less than 1.0%, more preferably less than or equal to 0.5 % and even more preferably less than 0.1% of the liquid moulding agent.

An aqueous solution consisting of both green soap solution or the like as mould entry aiding agent and a solution of OC-aquasil^{™} Tex 403 or the like as a mould release agent for enhancing mould release of the moulded product is an example of a suitable moulding agent solution. The ratios to water of the mould entry aiding agent and the mould release may be the same as described above or they may be reduced so that the total ratio of green soap and solution for enhancing the mould release properties of the moulded product is less than or equal to 10 part per 100 parts of water. A preferred ratio by volume is 5 parts mould entry aiding solution, 3 parts liquid mould release agent solution and 100 parts water. Such a liquid has good mould entry lubrification which prevents tearing of the blank when entering the mould and good mould release properties which prevent the moulded product from sticking to the mould or leaving residues on the mould surfaces.

The liquid moulding agent solution, preferably consisting of an aqueous mixture of both a green soap solution and a solution for enhancing the water repellent properties of the moulded product, may be applied at a rate on average across the cross direction of the blank which is greater than or equal to 100 grams per square metres (g/m²) of web and equal to or less than 400 g/m² of web, preferably which is greater than or equal to 120 g/m² of web and equal to or less than 300 g/m² of web, even more preferably which is greater than or equal to 150g/m² of web and equal to or less than 250 g/m² of web. Preferably, as the rate of evaporation of the water in the liquid moulding agent is dependent on the ambient conditions, the above rates are applied at controlled ambient conditions of 20-22° C and 55-65 % relative humidity. Higher rates can be used in conditions which increase evaporation from the blank and lower rates can be used in conditions which decrease evaporation from the blank
Adding too much liquid moulding agent increases moulding times and produces excess steam in the mould which may cause blisters or other irregularities on the surface of the moulded product. Adding too little liquid moulding agent may result in the liquid evaporating before the blank is fully inserted in the mould which, possibly due to a lack of lubrication between the web and the mould sides as it moves past them, leads to tearing of the blank and/or, irregular shapes in the final moulded product and/or irregular colouration of the final moulded product and/or residuals fibrous material being left in the mould. The skilled person can determine the correct amount of liquid moulding agent to be applied to a blank by increasing the amount of liquid moulding agent applied to surfaces which having moulding defects such as tears or irregular shapes, and by reducing the amount of liquid moulding agent applied to surfaces which have blisters or other irregulates caused by an excess of liquid moulding agent.

Experiments were made to determine the optimum ranges of parameters for producing clothes hangers using the system and methods of the present invention. The parameter that were tested were amount of water added, press temperature, press force, press time, amount of green soap in the liquid moulding agent comprised in the added water, amount of Aquasil in the liquid moulding agent comprised in the added water. The blanks were formed from fibres originating from rolls of kraft paper with the preferred composition, by weight of: water 6 %, aluminium sulphate 0.03 %, Dimethylethanolamine-epichlorohydrin polymer 0.03 %, fumarated rosin 0.20 %, sulphuric acid 0.01 %, alum: aluminium sulphate tetradecahydrate 1.00 %, the remainder being unbleached sulphate pulp. It has a COBB value of 20 g/m² (+ or - 5 g/m²).

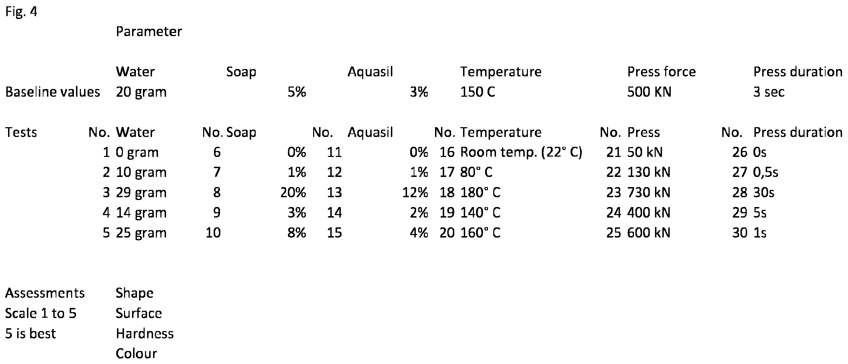

The blanks had major surfaces of 0.1 m² and of that total area an area of 0.02 m2 was subjected to the full compression force inside the mould. The baseline conditions were 20 g of aqueous solution (called "water" for brevity in the tests) water taken from a mixture comprising 100 litres of tap water, 5 litres of undiluted Green soap" from Jula AB, product number 003324, as available in January 2022 and 3 litres of undiluted Aquasil solution (OC-aquasil^{™} Tex 403 as available in February 2017), a press temperature of 150 ° C, a press force of 500kN and a press time of 3 seconds from the press being fully closed to open. These experiments were performed with the changes in parameters shown in the table in figure 4. It should be noted that the percentages of soap and Aquasil relate to the weight of each of these as a percentage of the volume of water which they are added to, thus, for example 10% soap means 10 units of soap to every 100 units of water.

Each pressed product was examined and graded by an experienced operator for shape, surface properties, hardness and colour. Grading was performed on scales of 1 to 65 with 5 being the best. A perfectly formed product has the correct shape without any bending or warping, a smooth surface without cracks or blisters which is hard enough to handle manually without damage or shedding fibres and which has an even beige or light brown colour.

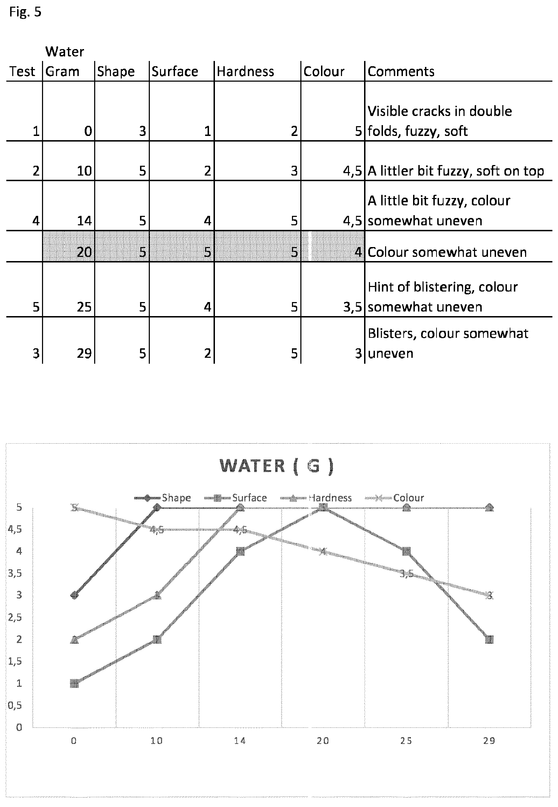

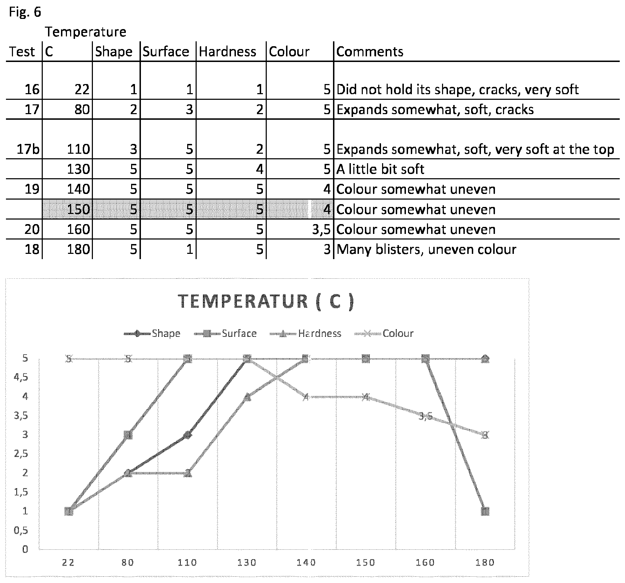

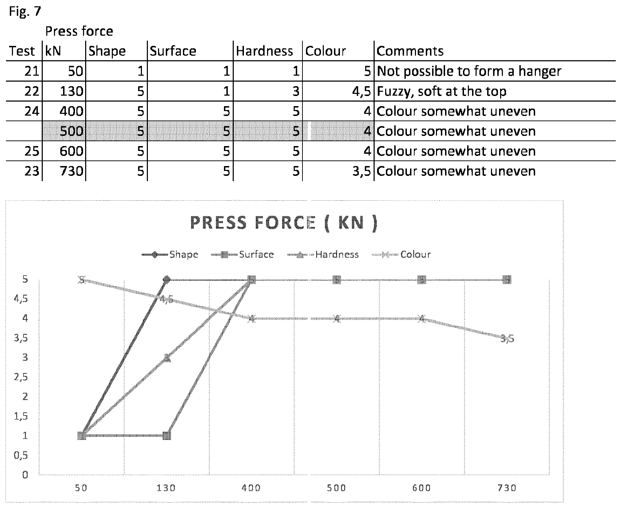

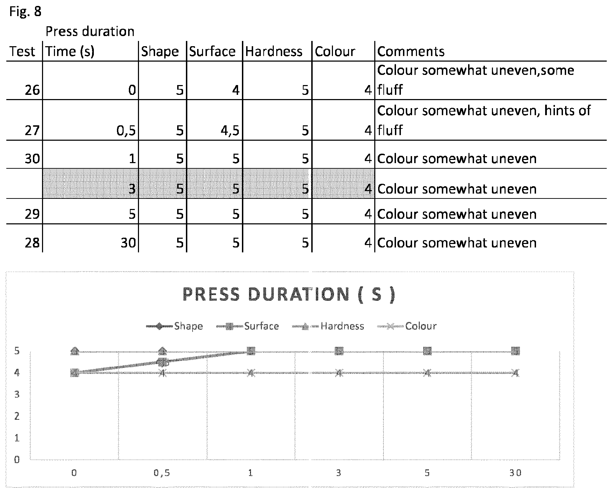

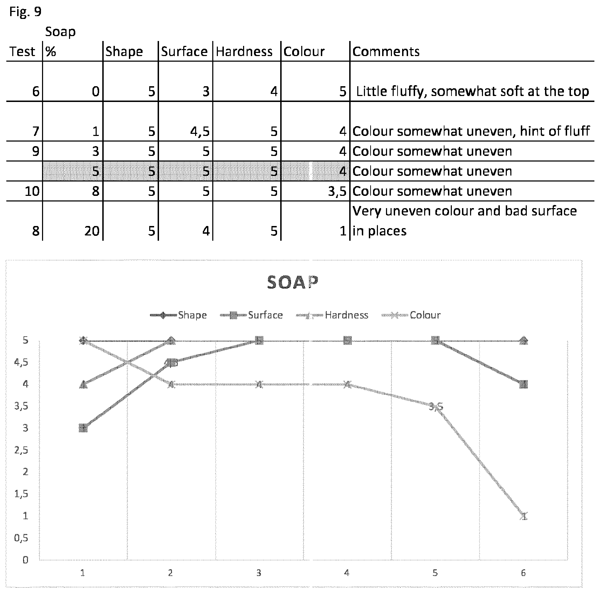

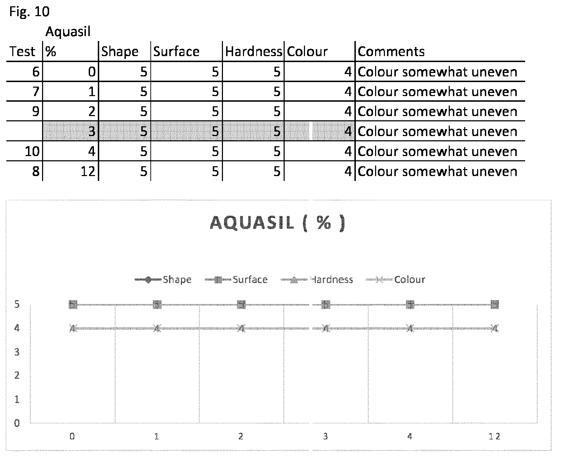

The results of the grading are shown in figures 5-10.

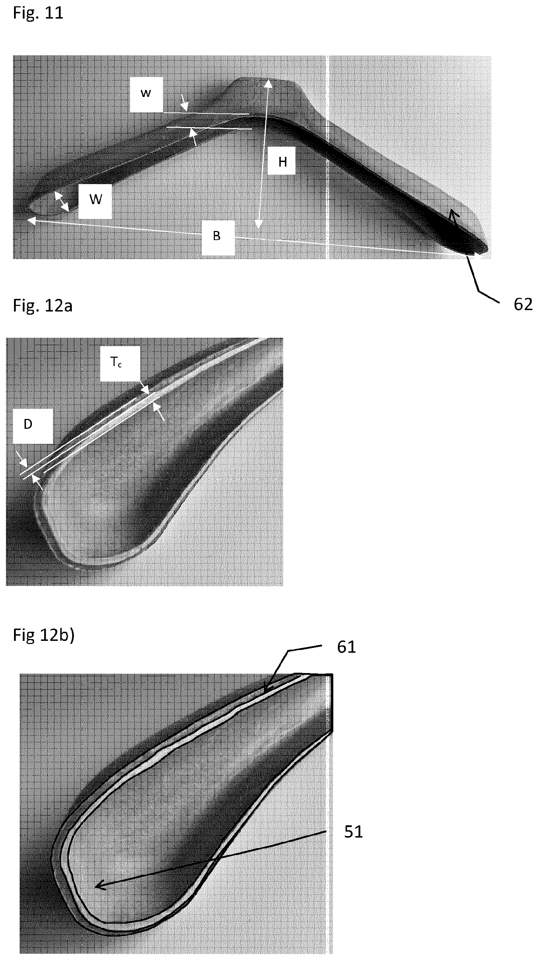

Fig. 11 is a photograph of a clothes hanger body 62 formed by systems and methods in accordance with the present invention. The clothes hanger body had a U-shaped profile with closed ends. It has a breadth B of 45 cm, a height H of 17 cm, a maximum width W of 5 cm and a minimum width d of 3 cm. It was made from a blank with a weight of 1900 g/m². The fibres for the blank were from Nordic paper iam Kraft SS904, 225g weight, of the specification available in January 2022. Liquid moulding agent was applied at 1300 g/m2 and it comprised 1% soap and 1% Aquasil. The moulding force was 300 kN. This example of a clothes hanger body exhibits imperfections such a fuzzy surface in the neck of the body and some cracks/raised edges on the shoulders of the body.

Fig. 12 a) shows a photograph of a portion of the clothes hanger body of fig. 11 showing in detail the skin 61 formed from the outermost major surface of the blank. The skin extends toward the core 51 and has a visible thickness D, E which has a maximum of approximately 2 mm and a minimum thickness of approximately 1 mm. The core 51 has a visible thickness Tc which has a maximum of approximately 3 mm and a minimum thickness of approximately 1 mm.

Fig 12b) is the same as figure 12a) with the exception of lines drawn to show the edges of the core 51 and skin 61 and the transition between them. The skin is clearly visible as a darker part of the clothes hanger body.

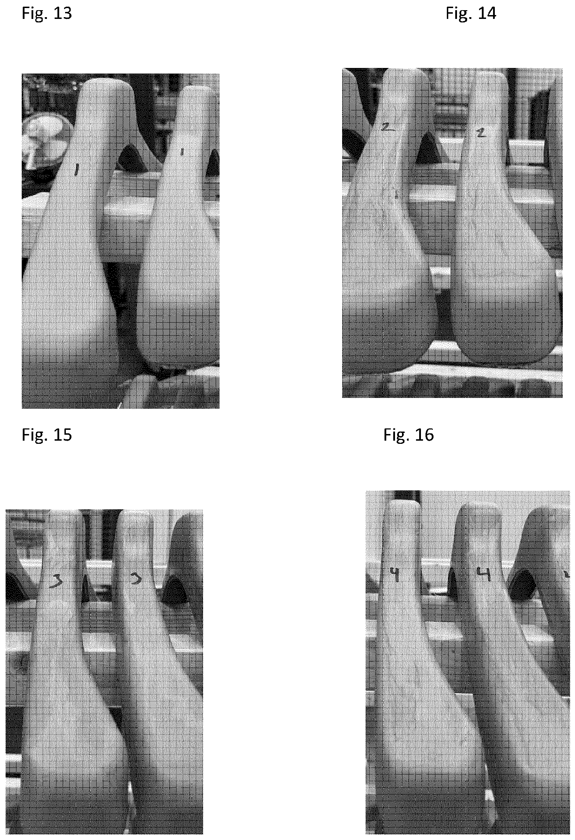

Figure 13 shows photographs of the test result from test 1.

Figure 14 shows photographs of the test result from test 2.

Figure 15 shows photographs of the test result from test 3.

Figure 16 shows photographs of the test result from test 4.

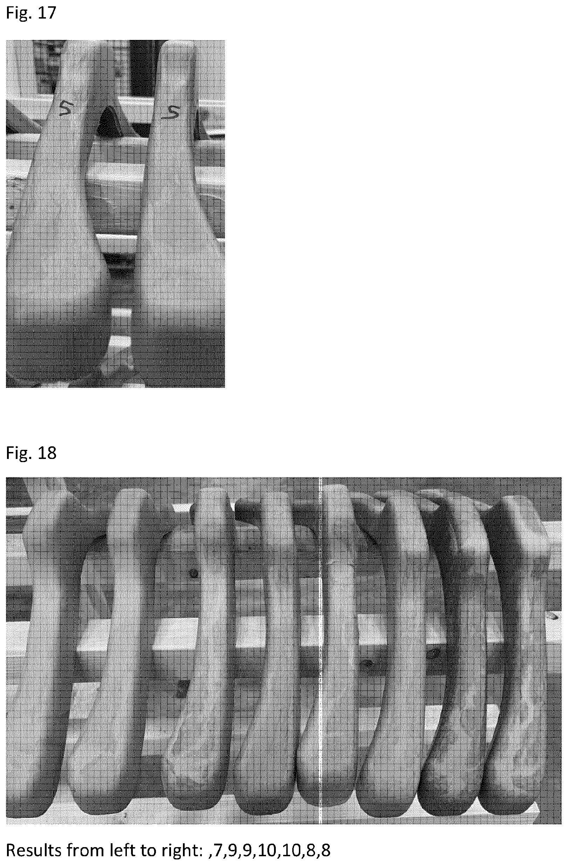

Figure 17 shows photographs of the test result from test 5.

Figure 18 shows photographs from left to result from tests,7,9,9,10,10,8,8.

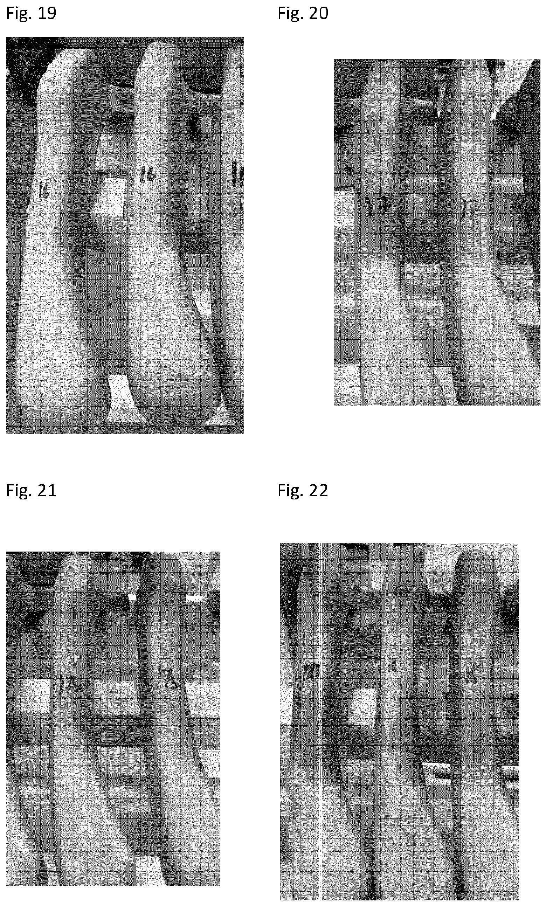

Figure 19 shows photographs of the test result from test 16.

Figure 20 shows photographs of the test result from test 17.

Figure 21 shows photographs of the test result from test 17b.

Figure 22 shows photographs of the test result from test 18.

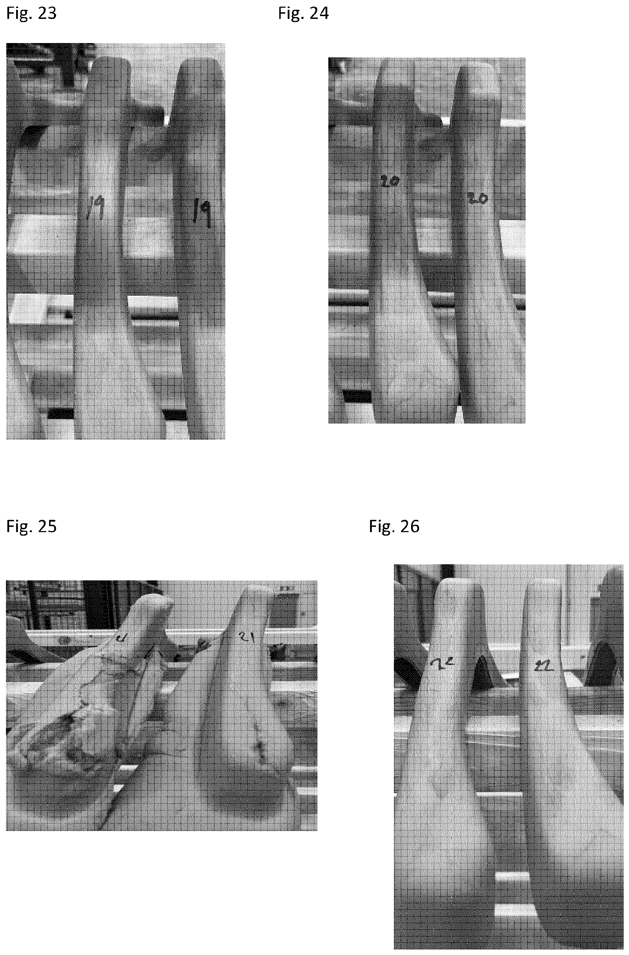

Figure 23 shows photographs of the test result from test 19.

Figure 24 shows photographs of the test result from test 20.

Figure 25 shows photographs of the test result from test 21.

Figure 26 shows photographs of the test result from test 22.

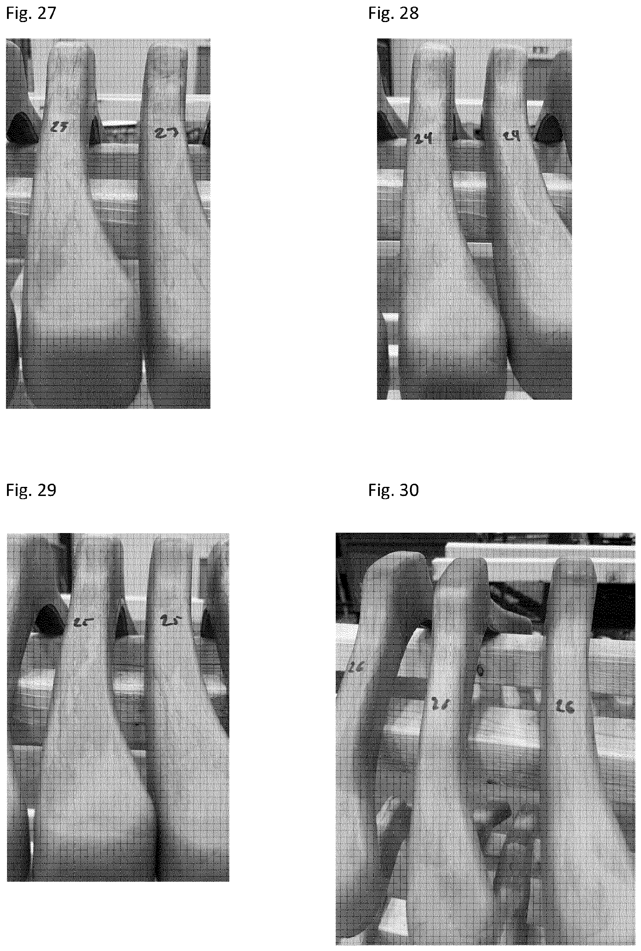

Figure 27 shows photographs of the test result from test 23.

Figure 28 shows photographs of the test result from test 24.

Figure 29 shows photographs of the test result from test 25.

Figure 30 shows photographs of the test result from test 26.

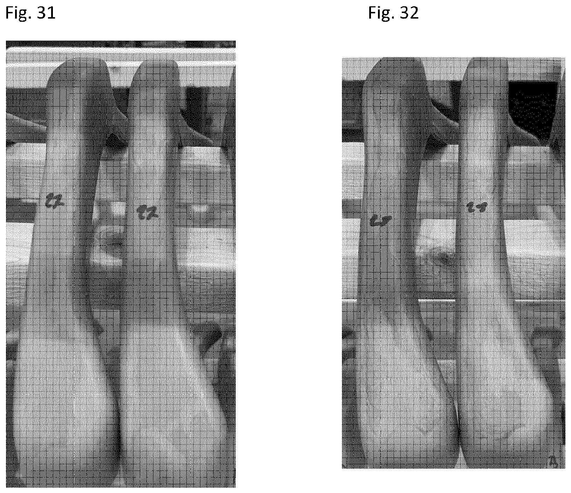

Figure 31 shows photographs of the test result from test 27.

Figure 32 shows photographs of the test result from test 28.

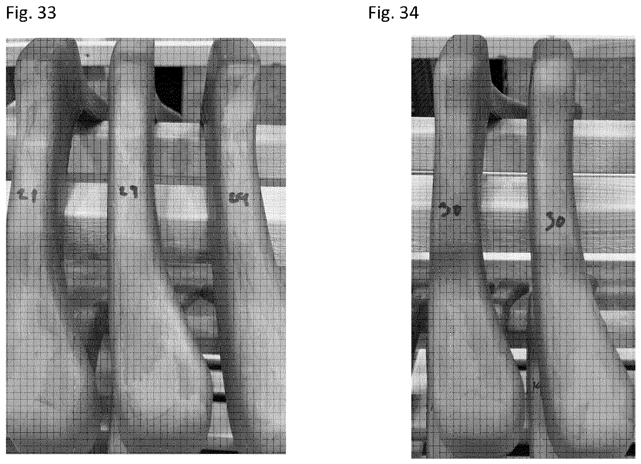

Figure 33 shows photographs of the test result from test 29.

Figure 34 shows photographs of the test result from test 30.

Some areas of the blank can be provided with a larger than average amount of liquid moulding agent. Such areas may include areas which are in contact with the heated mould surface for a relatively long time when the blank is being inserted into the mould, areas which have a high density of fibres, areas which are required to be darker than other areas, areas which are subjected to small bending radii, or areas which are intended to form shapes with multiple curvatures.

A liquid moulding agent may have several effects - it may help the cellulose fibres bind together during the heated pressing to form a more durable and/or stronger skin, it may aid mould entry of the blank by acting as a lubricant, it may result in a smooth skin on the moulded product, it may act as a mould release agent, and it may darken the surface of the moulded product that it has been applied to.

The moulded skin of the moulded product which has been exposed to an aqueous moulding agent comprising green soap has a surface roughness which is much less than that on surfaces of the moulded product which have not been exposed to the aqueous moulding agent. The reduction in surface roughness can be from 10% to 90% or more depending on the amount of liquid moulding agent supplied and its composition.

Adding green soap solution as the liquid moulding agent causes surfaces of the blank which were exposed to the green soap solution to form a skin and the average colour of the skin is darker than the average colour of the blank. If the finished product has core underneath the skin (i.e., in cases where the skin or skins do not penetrate though the whole depth of the product), then the colour of the skin is darker than that of the core - it has a reduction in whiteness. Whiteness can be measured under ISO standard ISO 11475:2017. This reduction in whiteness of the skin is believed to be at least partly caused by the thermal breakdown of the green soap in the heated mould, and it can be desirable if the moulded product is intended to simulate a wooden moulded product, for example a coat hanger. The change in whiteness of the skin of the moulded product can be measured on a scale of 0 to 100, wherein a non-fluorescing white paper which reflects all wavelengths of light in perfect balance will theoretically produce a CIE whiteness measurement of 100,, and depends on the type and amount of moulding agent used. When using moulding agent liquids containing green soap, the difference between any untreated surface and/or any core of the moulded product and/or the colour of the blank before application of any moulding agent, is such that preferably the average colour of the skin formed on the treated surface of the moulded product measured using ISO11475:2017 exhibits a reduction in brightness which is equal to or greater than 10 units and less than and equal to 40 units. Adding more green soap leads to a reduction in brightness.

Adding a liquid water-repellent moulding agent may cause the skin formed on surfaces exposed to the moulding agent to have enhanced moisture resistant properties and/or oil and grease resistant properties compared to the original raw material and the core of the moulded product.

The chemical composition of the skin differs from that of the core due to the dry residue from the liquid moulding agent that remain on and/or in the fibres that were in contact the liquid moulding agent. The amount of residue is very small and preferably the amount of liquid moulding agent is adjusted so that the chemical composition of the skin is identical with that of the core by an amount which is 99.0 % or more, or more preferably 99.5 % or yet more preferably 99.9% or more, or even more preferably 99.99% or more

In step 117 the liquid treated blanks are transported into a moulding device in a preferably humidity and temperature-controlled environment so that the moulding agent applied to the blank does not completely evaporate. Preferably the ambient temperature is maintained at a value which is equal to or greater than 15° C and less than or equal to 25° C, preferably is equal to or greater than 19° C and less than or equal to 22° C and most preferably is equal to or greater than 20° C and less than or equal to 21° C. The ambient humidity is maintained at a value which is preferably equal to or greater than 40 % and less than or equal to 70 %, more preferably equal to or greater than 50 % and less than or equal to 65 % and most preferably equal to or greater than 55 % and less than or equal to 60 %

Preferably the time taken from applying the liquid moulding agent to the blanks or web in step 115, 115' and the completed closing of the mould is equal to or less than 30 seconds, more preferably, less than or equal to 20 seconds, even more preferably less than or equal to 10 seconds.

In step 119 heat and pressure are applied to the blank inside the moulding device for a predetermined period of time in order to form a moulded product. Preferably the temperature is equal to or greater than 110° C and less than or equal to 180° C. Temperatures which are too high causes boiling during lowering of the workpiece to the heated surface which leaves marks. Preferably the pressing temperature is equal to or greater than 130° C and less than or equal to 150° C at which temperatures the fibres bind. The contact time of the blank to the press walls while the press is still open during loading and closing of the press is preferably less than 5 seconds to reduce the amount of evaporation of the liquid moulding agent.

Preferably the press holding time when the press is fully closed is equal to or greater than 1 second and less than or equal to 15 seconds, more preferably the time is equal to or greater than 2 seconds and less than or equal to 10 seconds, yet more preferably the press holding time is equal to or greater than 3 seconds and less than or equal to 5 seconds. The press time should be adapted to the thickness and amount of material being pressed. If the press time is too short, then the moulded product may be too soft due to insufficient bonding between the cellulose fibres. If the press time is too long, then time is wasted.

Preferably the pressing force is equal to or greater than 200 kN per blank/moulded product and less than or equal to 1500 kN per blank/moulded product, more preferably the pressing pressure is equal to or greater than 300 kN per blank/moulded product and less than or equal to 1000 kN per blank/moulded product, yet more preferably the pressing pressure is equal to or greater than 400 kN per blank/moulded product and less than or equal to 600 kN per blank/moulded product.

The pressing force can be expressed as MN/m2 of moulded surface area and preferably the pressing force is equal to or greater than 10 MN/m² and less than or equal to 75MN/m², more preferably the pressing force is equal to or greater than 15 MN/m² and less than or equal to 50 MN/m², yes more preferably the pressing force is equal to or greater than 20 MN/m² and less than or equal to 30 MN/m².

In step 121 the moulded product is removed or ejected from the mould in the moulding device.

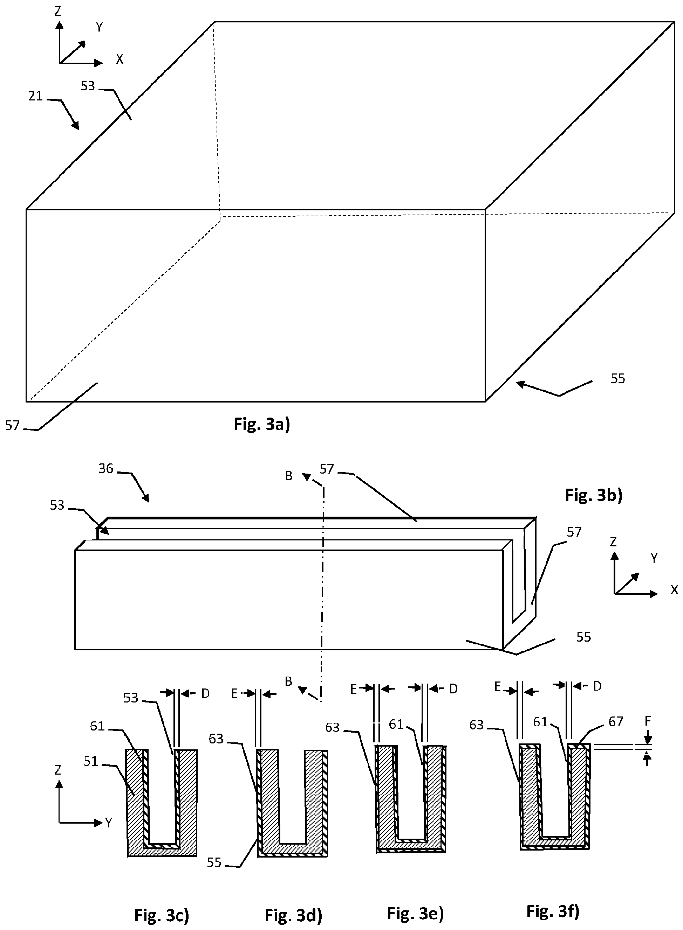

Figure 3a) shows a schematic perspective view of a blank 21 for forming into a moulded product 36 with a U-shaped profile produced by systems and methods in accordance with the present invention. The blank 36 has a core 51 of cellulose fibres, a first major surface 53, an opposed second major surface 55 and a peripheral surface 57 between the first and second major surfaces. Preferably, before any liquid moulding agent has been applied to the blank, the core has substantially the same chemical composition as the dry laid web leaving the forming arrangement.

Figure 3b) shows a schematic perspective view of a moulded product 36 with a U-shaped profile formed after the blank of figure 3a) has been produced by systems and methods in accordance with the present invention.

Figure 3c) shows a schematic cross section of the moulded product of figure 3b) along line B-B when the first major surface 53 of the blank has been treated with a liquid moulding agent before moulding. The cellulose fibres of the treated first major surface 53 which have been in contact with the liquid moulding agent have united to form a skin 61 which extends a maximum depth D from the first major surface towards the core 51. The skin is integrated with the fibres of the core to form a unitary structure which cannot be peeled from the core. The chemical composition of the skin only differs from that of the core due to the dry residue from the liquid moulding agent that remain on the fibres that were in contact with the liquid moulding agent. The amount of residue is very small and preferably the amount of liquid moulding agent is adjusted so that the chemical composition of the skin is identical to that of the core by an amount which is 99.0 % or more, or more preferably 99.5 % or more, yet more preferably 99.9% or more, or even more preferably 99.99% or more.

Figure 3d) shows a schematic cross section of the moulded product of figure 3b) along line B-B when the second major surface 55 of the blank has been treated with a liquid moulding agent before moulding. The cellulose fibres of the treated second major surface 55 have united to form a skin 63 which extends a maximum depth E from the second major surface towards the core 51.

Figure 3e) shows a schematic cross section of the moulded product of figure 3b) along line B-B when the first and second major surfaces 53, 55 of the blank 21 have been treated with a liquid moulding agent before moulding. The cellulose fibres of the treated first major surface 53 have united to form a skin 61 which extends a maximum depth D from the first major surface towards the core and the cellulose fibres of the treated second major surface 55 have united to form a skin 63 which extends a maximum depth E from the second major surface towards the core 51.

Figure 3f) shows a schematic cross section of the moulded product of figure 3b) along line B-B when all the surfaces 53, 55, 57 of the blank have been treated with a liquid moulding agent before moulding. The cellulose fibres of the treated first major surface 53 have united to form a skin 61 which extends a maximum depth D from the first major surface towards the core, the cellulose fibres of the treated second major surface 55 have united to form a skin 63 which extends a maximum depth E from the second major surface towards the core 51 and the cellulose fibres of the peripheral surface 57 have united to form a skin 67 which extends a maximum depth E from the peripheral surface towards the core 51.

The concentration of liquid moulding agent applied should be adjusted so, by weight, any solid residuals of the liquid moulding agent are preferably equal to or less than 1.0%, more preferably less than or equal to 0.5 % and even more preferably less than 0.1% of the liquid moulding agent.

The use of a mould entry aiding agent and /or mould release agent as a moulding agent liquid before pressing the blank may cause the treated surface of the finished moulded product to have a skin which has an abrasion resistance which is greater than finished surfaces which have not been treated with the solution. The two major surfaces of a moulded product of which only one major surface had been treated with a moulding agent liquid and thus had a skin and the other major surface was formed of the exposed core, were subjected to the same amount of abrasion in a test. The amount of fibres abraded from each surface were compared and the untreated surface/core was abraded at more than twice the rate of the treated surface. Thus, the skin formed on the major surface had an abrasion resistance which was more than twice the abrasion resistance of the core.

Preferably the amount and composition of the moulding agent liquid is adjusted so that the depths D and E of each skin 61, 63 are each equal to or greater than 0.1 mm, more preferably equal to or greater than 0.5 mm, even more preferably equal to or greater than 1 mm in order to give the complete product good durability and reduce the amount of fibres lost when the surface is subjected to abrasion.

When the skin is formed by the application of a liquid moulding agent which is hydrophobic, the skin may also provide an increased resistance to water, i.e., the skin has a lower COBB value than the core. Of course, the COBB value of the core is the same as that of the raw material, including any surface treated recycled web, provided to the milling device (if it were made into a moulded product using the same process as the moulded product but without the addition of moulding agents) as substantially no treatments or additives are added in steps 115, 115' to the web which forms the core of the product. Any such increased resistance to water makes such a moulded product suitable for applications where there is humidity and abrasion, for example as clothes hangers for garments passing through a steam tunnel. Such clothes hangers will retain their strength in the steam tunnel and will not leave cellulose fibres on the garments being carried on them.

The skin may also exhibit increased resistance to the absorption of oils and fats compared to the core and raw material used to form the web and blanks. Thus, the skin is more oleophobic than the core.

It is conceivable that when a thin product is made, the skin or skins extend all the way through the moulded product and there is no core remaining. In such cases the COBB value for the skin is preferably the same as, or lower than, that of the fibrous raw material entering the mill.

While increased moisture resistance is a positive effect for increasing the durability of moulded products subjected to humidity, this also means that discarded moulded products may take longer to decompose as it absorbs moisture slowly. In order to speed up decomposition of the moulded product it is preferrable that some of the core of the product retains its original, lower resistance to moisture. Preferably the depths D and E together are less than or equal to 50% or less of the local total thickness of the moulded product so that once a skin is broken, and the product is no longer wanted, moisture can reach the core, cause the core to swell and the product to disintegrate. The moulded product comprises mainly of paper and an almost negligible amount of the solid remains of the chemicals used in the liquid moulding agent. Normally, when liquid moulding agent is applied at rates on average across the cross direction of the blank which are greater than or equal to 10 g/m² of web and equal to or less than 400 g/m² of web then the chemical composition of any skin formed by the liquid moulding agent is 99% or more identical to that of the raw material leaving the milling device. Owing to this, moulded products do not present any environmental hazards and can be disposed of, or recycled, as paper waste.

Preferably cellulose fibre products produced by systems and methods according to the present invention have at least one skin which has a minimum visible thickness D, E equal to or greater than 0.10 mm, more preferably equal to or greater than 0.20 mm, even more preferably equal to or greater than 0.50 mm, yet more preferably equal to or greater than 1.00 mm, further more preferably equal to or greater than 2.00 mm and most preferably equal to or greater than 3.00 mm.

Preferably each skin has a maximum visible thickness D, E equal to or less than to 5.00 mm, more preferably equal to or less than or equal to 4.00 mm, even more preferably less than or equal to 3.00 mm, yet more preferably less than or equal to 2.00mm and most preferably less than or equal to 1.00 mm

Preferably cellulose fibre products produced by systems and methods according to the present invention have a core which a minimum visible thickness Tc equal to or greater than 0.10 mm, more preferably equal to or greater than 0.20 mm, even more preferably equal to or greater than 0.50 mm, yet more preferably equal to or greater than 1.00 mm, further more preferably equal to or greater than 2.00 mm and most preferably equal to or greater than 3.00 mm.

Preferably each core has a maximum visible thickness Tc equal to or less than to 5.00 mm, more preferably equal to or less than or equal to 4.00 mm, even more preferably less than or equal to 3.00 mm, yet more preferably less than or equal to 2.00mm and most preferably less than or equal to 1.00 mm.

## Claims

1. System for producing a moulded product from dry laid cellulose fibre comprising
a fibrous raw material supporting frame (2) for supporting one or more rolls (3¹- 3ⁿ) of fibrous raw material (5) comprising cellulose fibres,
a raw material transport system (7) for transporting the raw material to a milling device (9) for converting the raw material into cellulose fibres and cellulose fluff (11),
a forming arrangement (13) for dry laying the cellulose fibres and cellulose fluff into a web of fibres (15), a web transport system (17) for transporting the web of fibres to a blank forming machine (19) for forming from the web and removing from the web the blanks (21) intended to form the finished moulded product (36) ,
a blank transport system (23) for transporting blanks towards, and into, one or more, moulds (25) in a moulding device (27) comprising one or more mould(s) and pressure-applying means (29) for applying pressure to the blanks (21) in the mould(s) (25),
a moulded product removing and transporting device (35) for removing moulded products (36) from the moulds, and a control system (37) for controlling the system for producing moulded products,
wherein:
a) after the blank forming machine (19) and before the blank transport system (23), a liquid moulding agent applying system (31) is arranged for supplying and applying a liquid moulding agent (33) consisting of an aqueous solution of mould entry aiding agent and/or mould release agent to the blanks (21) before they enter the mould(s) (25), or
b) after the forming arrangement (13) and before the blank forming machine (19), a liquid moulding agent applying system (31') is arranged for applying a liquid moulding agent (33) consisting of an aqueous solution of mould entry aiding agent and/or mould release agent to the web (15).

2. System according to claim 1 **characterised in that** the liquid moulding agent applying system comprises a supply (32) of liquid moulding agent consisting of an aqueous solution of mould lubricating agent and/or an aqueous solution of mould release agent, wherein the dissolved solids in the liquid moulding agent are equal to or less than 1.0%, preferably less than or equal to 0.5 % and more preferably less than 0.1% by weight of the liquid moulding agent.

3. System according to claim 2 wherein the supply (32) of liquid moulding agent comprises a mould entry aiding agent and/or a mould release agent, wherein preferably said mould entry aiding agent comprises an aqueous solution of soap, preferably a plant-base soap such as green soap and said mould release agent comprises an aqueous solution of organic silicon prepolymer from 1% to less than 5 %, 2-(2-butooxyethoxy)ethanol greater than 0% and less than or equal to 1% and Zirconium acetate from greater than or equal to 1% and equal to or less than 3%, the remainder being water.

4. System according to any of claims 1 to 3 wherein the liquid moulding agent applying system (31') is adapted to apply said liquid moulding agent (33) on the blank (21) or web (15) at a rate on average across the cross direction of the blank which is greater than or equal to 100 grams per square metres (g/m²) of web and equal to or less than 400 g/m² of web, preferably which is greater than or equal to 120 g/m² of web and equal to or less than 300 g/m² of web, even more preferably which is greater than or equal to 150g/m² of web and equal to or less than 250 g/m² of web.

5. Method for producing moulded products from cellulose fibre in a system according to any of the previous claims comprising the steps of:
providing (101) cellulose fibre-containing fibrous raw material,
transporting and feeding (103) said fibrous raw material into a milling device,
converting (105) said raw material into cellulose fibres and fluff in said milling device, dry laying (107) the cellulous fibres and fluff into a web of fibres (15) with greater than 99% the same chemical composition as the fibrous raw material,
transporting (109) the web of fibres through a press roll system to compact the web, and:
i) forming (111) one or more blanks (21) and excess web material (22) from said web of fibres, removing the one or more blanks from the web,
transporting (113) the one or more blanks (21) towards one or more moulding devices,
applying (115) a liquid moulding agent (33) comprising an aqueous solution of mould lubrication agent and/or mould release agent onto the one or more blanks,
transporting (117) the one or more surface treated blanks into said one or more moulding devices,
applying heat and pressure (119) to the one or more blank inside the one or more moulding device(s) for a predetermined period of time in order to form one or more moulded products (39),
ejecting (121) the one or more moulded products from the one or more moulding devices; or,
ii) applying (115') a liquid moulding agent (33) comprising an aqueous solution of mould entry aiding agent and/or mould release agent onto the web (15),
forming (111) one or more blanks (21) and excess web material (22') from said surface treated web of fibres removing the one or more blanks from the web,
transporting (113) the one or more blanks towards one or more moulding devices,
transporting (117) the one or more blanks into said one or more moulding devices
applying heat and pressure (119) to the one or more blanks inside the one or more moulding devices for a predetermined period of time in order to form one or more moulded products ejecting (121) the one or more formed moulded product from the one or more moulding devices.

6. Method according to claim 5 **characterised in that** the liquid moulding agent (33) consists of an aqueous solution of mould lubricating agent and/or an aqueous solution of mould release agent, wherein the dissolved solids in the liquid moulding agent are equal to or less than 1.0%, preferably less than or equal to 0.5 % and more preferably less than 0.1% by weight of the liquid moulding agent.

7. Method according to any of claims 5 or 6 **characterised in that** the step of applying the liquid moulding agent comprises applying the liquid moulding agent at a rate on average across the cross direction of the blank which is greater than or equal to 100 grams per square metres (g/m²) of web and equal to or less than 400 g/m² of web, preferably which is greater than or equal to 120 g/m² of web and equal to or less than 300 g/m² of web, even more preferably which is greater than or equal to 150g/m² of web and equal to or less than 250 g/m² of web.

8. Method according to any of claims 5-7 **characterised in that** the step of providing (101) a cellulose fibre-containing raw material comprises providing a fibrous raw material, preferably in the form of at least one roll of paper, which has a COBB value according to TAPPI T411 for nonbibulous paper, respectively TAPPI T 432 for bibulous paper that were current on January 1, 2022, equal to or less than 70 g/m², preferably equal to or less than 50 g/m², more preferably equal to or less than 30 g/m², yet more preferably equal to or less than 20 g/m² and most preferably equal to or less than 10 g/m².

9. Method according to any of claims 5 to 8 wherein said liquid moulding agent comprises a mould entry aiding agent and/or a mould release agent.

10. Method according to claim 9, wherein said mould entry aiding agent comprises an aqueous solution of soap.

11. Method according to claim 10, wherein said soap is a plant-based soap.

12. Method according to any of claims 9 to 11, wherein said mould release agent comprises an aqueous solution of organic silicon prepolymer from 1% to less than 5 %, 2-(2-butooxyethoxy)ethanol greater than 0% and less than or equal to 1% and Zirconium acetate from greater than or equal to 1% and equal to or less than 3%, the remainder being water.

## Patentansprüche

1. System zum Herstellen eines Formprodukts aus trockengelegten Cellulosefasern, umfassend
einen Stützrahmen (2) für faseriges Rohmaterial zum Stützen einer oder mehrerer Walzen (3¹- 3ⁿ) aus faserigem Rohmaterial (5), umfassend Cellulosefasern,
ein Rohmaterialtransportsystem (7) zum Transportieren des Rohmaterials zu einer Mahlvorrichtung (9) zum Umwandeln des Rohmaterials in Cellulosefasern und Celluloseflocken (11),
eine Formanordnung (13) zum Trockenlegen der Cellulosefasern und der Celluloseflocken in eine Faserbahn (15), ein Bahntransportsystem (17) zum Transportieren der Faserbahn zu einer Rohlingformmaschine (19) zum Bilden der Bahn und Entfernen der Rohlinge (21), die das fertige Formprodukt (36) bilden sollen, von der Bahn,
ein Rohlingtransportsystem (23) zum Transportieren von Rohlingen zu und in eine oder mehrere Formen (25) in einer Formvorrichtung (27), die eine oder mehrere Form(en) und Druckaufbringungsmittel (29) zum Aufbringen von Druck auf die Rohlinge (21) in der/den Form(en) (25) umfasst,
eine Vorrichtung (35) zum Entfernen und Transportieren von Formprodukten (36) aus den Formen und ein Steuersystem (37) zum Steuern des Systems zum Herstellen von Formprodukten, wobei:
a) nach der Rohlingformmaschine (19) und vor dem Rohlingtransportsystem (23) ein flüssiges Formmittelaufbringsystem (31) zum Zuführen und Aufbringen eines flüssigen Formmittels (33) aus einer wässrigen Lösung von Formeintrittshilfsmittel und/oder Formtrennmittel auf die Rohlinge (21) vor dem Eintreten in die Form(en) (25) angeordnet ist, oder
b) nach der Formanordnung (13) und vor der Rohlingformmaschine (19) ein flüssiges Formmittelaufbringsystem (31') zum Aufbringen eines flüssigen Formmittels (33) aus einer wässrigen Lösung von Formeintrittshilfsmittel und/oder Formtrennmittel auf die Bahn (15) angeordnet ist.

2. System nach Anspruch 1, **dadurch gekennzeichnet, dass** das flüssige Formmittelaufbringsystem eine Zufuhr (32) an flüssigem Formmittel umfasst, die aus einer wässrigen Lösung von Formschmiermittel und/oder einer wässrigen Lösung von Formtrennmittel besteht, wobei die gelösten Feststoffe in dem flüssigen Formmittel gleich oder weniger als 1,0 Gew.-%, bevorzugt weniger als oder gleich 0,5 Gew.-% und bevorzugter weniger als 0,1 Gew.-% des flüssigen Formmittels sind.

3. System nach Anspruch 2, wobei die Zufuhr (32) von flüssigem Formmittel ein Formeintrittshilfsmittel und/oder ein Formtrennmittel umfasst, wobei das Formeintrittshilfsmittel bevorzugt eine wässrige Seifenlösung umfasst, bevorzugt eine Seife auf Pflanzenbasis, wie grüne Seife, und das Formtrennmittel eine wässrige Lösung von organischem Siliciumprepolymer von 1 % bis weniger als 5 %, 2-(2-Butooxyethoxy)ethanol von mehr als 0 % und weniger als oder gleich 1 % und Zirkoniumacetat von mehr als oder gleich 1 % und gleich oder weniger als 3 % umfasst, wobei der Rest Wasser ist.

4. System nach einem der Ansprüche 1 bis 3, wobei das flüssige Formaufbringsystem (31') angepasst ist, das flüssige Formmittel (33) auf den Rohling (21) oder die Bahn (15) mit einer durchschnittlichen Menge in Querrichtung des Rohlings aufzubringen, die mehr als oder gleich 100 Gramm pro Quadratmeter (g/m²) der Bahn und gleich oder weniger als 400 g/m² der Bahn ist, bevorzugt, die mehr als oder gleich 120 g/m² der Bahn und gleich oder weniger als 300 g/m² der Bahn ist, noch bevorzugter, die mehr als oder gleich 150 g/m² der Bahn und gleich oder weniger als 250 g/m² der Bahn ist.

5. Verfahren zum Herstellen von Formprodukten aus Cellulosefasern in einem System nach einem der vorhergehenden Ansprüche, umfassend die Schritte:
Bereitstellen (101) von cellulosefaserhaltigem Faserrohmaterial, Transportieren und Einspeisen (103) des Faserrohmaterials in eine Mahlvorrichtung,
Umwandeln (105) des Rohmaterials in Cellulosefasern und -flocken in der Mahlvorrichtung,
Trockenlegen (107) der Cellulosefasern und -flocken in eine Faserbahn (15) mit mehr als 99 % der gleichen chemischen Zusammensetzung wie das Faserrohmaterial,
Transportieren (109) der Faserbahn durch ein Presswalzensystem, um die Bahn zu verdichten, und:
i) Bilden (111) eines oder mehrerer Rohlinge (21) und überschüssigen Bahnmaterials (22) von der Faserbahn, Entfernen des einen oder der mehreren Rohlinge von der Bahn,
Transportieren (113) des einen oder der mehreren Rohlinge (21) zu einer oder mehreren Formvorrichtungen,
Aufbringen (115) eines flüssigen Formmittels (33), das eine wässrige Lösung von Formschmiermittel und/oder Formtrennmittel umfasst, auf den einen oder die mehreren Rohlinge,
Transportieren (117) des einen oder der mehreren oberflächenbehandelten Rohlinge in die eine oder die mehreren Formvorrichtungen,
Aufbringen von Wärme und Druck (119) auf den einen oder die mehreren Rohlinge innerhalb der einen oder mehreren Formvorrichtung(en) für eine vorbestimmte Zeitdauer, um ein oder mehrere Formprodukte (39) zu bilden,
Auswerfen (121) des einen oder der mehreren Formprodukte aus der einen oder den mehreren Formvorrichtungen; oder
ii) Aufbringen (115') eines flüssigen Formmittels (33), das eine wässrige Lösung von Formeintrittshilfsmittel und/oder Formtrennmittel umfasst, auf die Bahn (15),
Bilden (111) eines oder mehrerer Rohlinge (21) und überschüssigen Bahnmaterials (22') von der oberflächenbehandelten Faserbahn,
Entfernen des einen oder der mehreren Rohlings von der Bahn,
Transportieren (113) des einen oder der mehreren Rohlinge zu einer oder mehreren Formvorrichtungen,
Transportieren (117) des einen oder der mehreren Rohlinge in die eine oder die mehreren Formvorrichtungen
Aufbringen von Wärme und Druck (119) auf den einen oder die mehreren Rohlinge innerhalb der einen oder der mehreren Formvorrichtungen für eine vorbestimmte Zeitdauer, um ein oder mehrere Formprodukte zu bilden
Auswerfen (121) des einen oder der mehreren gebildeten Formprodukte aus der einen oder den mehreren Formvorrichtungen.

6. Verfahren nach Anspruch 5, **dadurch gekennzeichnet, dass** das flüssige Formmittel (33) aus einer wässrigen Lösung von Formschmiermittel und/oder einer wässrigen Lösung von Formtrennmittel besteht, wobei die gelösten Feststoffe in dem flüssigen Formmittel gleich oder weniger als 1,0 %, bevorzugt weniger als oder gleich 0,5 % und bevorzugter weniger als 0,1 Gew.- % des flüssigen Formmittels sind.

7. Verfahren nach einem der Ansprüche 5 oder 6, **dadurch gekennzeichnet, dass** der Schritt des Aufbringens des flüssigen Formmittels das Aufbringen des flüssigen Formmittels mit einer durchschnittlichen Menge in Querrichtung des Rohlings umfasst, die mehr als oder gleich 100 Gramm pro Quadratmeter (g/m²) der Bahn und gleich oder weniger als 400 g/m² der Bahn ist, bevorzugt, die mehr als oder gleich 120 g/m² der Bahn und gleich oder weniger als 300 g/m² der Bahn ist, noch bevorzugter, die mehr als oder gleich 150 g/m² der Bahn und gleich oder weniger als 250 g/m² der Bahn ist.

8. Verfahren nach einem der Ansprüche 5 bis 7, **dadurch gekennzeichnet, dass** der Schritt des Bereitstellens (101) eines Cellulosefaser enthaltenden Rohmaterials das Bereitstellen eines faserigen Rohmaterials umfasst, bevorzugt in Form mindestens einer Papierrolle, die einen COBB-Wert gemäß TAPPI T411 für nichtsaugfähiges Papier hat, bzw. TAPPI T 432 für saugfähiges Papier, der am 1. Januar 2022 aktuell war, gleich oder weniger als 70 g/m², bevorzugt gleich oder weniger als 50 g/m², noch bevorzugter gleich oder weniger als 30 g/m², noch bevorzugter gleich oder weniger als 20 g/m² und am meisten bevorzugt gleich oder weniger als 10 g/m².

9. Verfahren nach einem der Ansprüche 5 bis 8, wobei das flüssige Formmittel ein Formeintrittshilfsmittel und/oder ein Formtrennmittel umfasst.

10. Verfahren nach Anspruch 9, bei dem das Formeintrittshilfsmittel eine wässrige Seifenlösung umfasst.

11. Verfahren nach Anspruch 10, wobei die Seife eine Seife auf Pflanzenbasis ist.

12. Verfahren nach einem der Ansprüche 9 bis 11, wobei das Formtrennmittel eine wässrige Lösung von organischem Siliciumprepolymer von 1 % bis weniger als 5 %, 2-(2-Butooxyethoxy)ethanol von mehr als 0 % und weniger als oder gleich 1 % und Zirkoniumacetat von mehr als oder gleich 1 % und gleich oder weniger als 3 % umfasst, wobei der Rest Wasser ist.

## Revendications

1. Système de fabrication d'un produit moulé à partir de fibres cellulosiques obtenues par la pose à sèche comprenant
un cadre de support de matière première fibreuse (2) pour supporter un ou plusieurs rouleaux (3¹-3ⁿ) de matière première fibreuse (5) comprenant des fibres de cellulose,
un système de transport de matière première (7) pour transporter la matière première vers un dispositif de broyage (9) pour convertir la matière première en fibres de cellulose et en ouate de cellulose (11),
un agencement de formage (13) pour la pose à sec des fibres de cellulose et de la ouate de cellulose dans une bande de fibres (15), un système de transport de bande (17) pour transporter la bande de fibres vers une machine de formage de blancs (19) pour former à partir de la bande et retirer de la bande les blancs (21) destinés à former le produit moulé fini (36),
un système de transport des blancs (23) pour transporter des ébauches vers, et dans, un ou plusieurs moules (25) dans un dispositif de moulage (27) comprenant un ou plusieurs moules et des moyens d'application de pression (29) pour appliquer une pression sur les blancs (21) dans le ou les moules (25),
un dispositif de retrait et de transport de produits moulés (35) pour retirer des produits moulés (36) des moules, et un système de commande (37) pour commander le système pour produire des produits moulés, dans lequel :
a) après la machine de formage de blancs (19) et avant le système de transport de blancs (23), un système d'application d'agent de moulage liquide (31) est agencé pour fournir et appliquer un agent de moulage liquide (33) consistant en une solution aqueuse d'agent d'aide à l'entrée de moule et/ou d'agent de démoulage aux blancs (21) avant qu'elles ne pénètrent dans le ou les moules (25), ou
b) après l'agencement de formage (13) et avant la machine de formage de blancs (19), un système d'application d'agent de moulage liquide (31') est agencé pour appliquer un agent de moulage liquide (33) constitué d'une solution aqueuse d'agent d'aide à l'entrée de moule et/ou d'agent de démoulage sur la bande (15).

2. Système selon la revendication 1, **caractérisé en ce que** le système d'application d'agent de moulage liquide comprend une alimentation (32) d'agent de moulage liquide consistant en une solution aqueuse d'agent lubrifiant de moulage et/ou une solution aqueuse d'agent de démoulage, dans lequel les solides dissous dans l'agent de moulage liquide sont égaux ou inférieurs à 1,0 %, de préférence inférieurs ou égaux à 0,5 % et plus préférablement inférieurs à 0,1 % en poids de l'agent de moulage liquide.

3. Système selon la revendication 2, dans lequel l'alimentation (32) en agent de moulage liquide comprend un agent facilitant l'entrée du moule et/ou un agent de démoulage, dans lequel de préférence ledit agent d'aide à l'entrée du moule comprend une solution aqueuse de savon, de préférence, un savon à base végétale tel qu'un savon vert et ledit agent de démoulage comprend une solution aqueuse de prépolymère de silicium organique de 1 % à moins de 5 %, 2-(2-butooxyéthoxy)éthanol supérieur à 0 % et inférieur ou égal à 1 % et acétate de zirconium à partir de plus ou égal à 1 % et égal ou inférieur à 3 %, le reste étant de l'eau.

4. Système selon l'une quelconque des revendications 1 à 3, dans lequel le système d'application d'agent de moulage liquide (31') est adapté pour appliquer ledit agent de moulage liquide (33) sur le blanc (21) ou la bande (15) à une quantité en moyenne transversalement à la direction transversale de l'ébauche qui est supérieure ou égale à 100 grammes par mètre carré (g/m²) de bande et égale ou inférieure à 400 g/m² de bande, de préférence supérieure ou égale à 120 g/m² de bande et égale ou inférieure à 300 g/m² de bande, encore plus préférentiellement, elle est supérieure ou égale à 150 g/m² de bande et égale ou inférieure à 250 g/m² de bande.

5. Procédé pour produire des produits moulés à partir de fibres de cellulose dans un système selon l'une quelconque des revendications précédentes, comprenant les étapes suivantes :
la fourniture (101) d'une matière première fibreuse contenant des fibres de cellulose,
le transport et l'alimentation (103) de ladite matière première fibreuse dans un dispositif de broyage,
la conversion (105) de ladite matière première en fibres de cellulose et en ouate dans ledit dispositif de broyage,
la pose à sec (107) des fibres cellulosiques et de la ouate en une bande de fibres (15) avec plus de 99 % de la même composition chimique que la matière première fibreuse,
le transport (109) de la bande de fibres à travers un système de rouleau de presse pour compacter la bande, et :
i) la formation (111) d'un ou plusieurs blancs (21) et d'un matériau en bande en excès (22) à partir de ladite bande de fibres, l'enlèvement de la ou des blancs de la bande,
le transport (113) du ou des blancs (21) vers un ou plusieurs dispositifs de moulage,
l'application (115) d'un agent de moulage liquide (33) comprenant une solution aqueuse d'agent de lubrification de moule et/ou d'agent de démoulage sur le ou les blancs,
le transport (117) du ou des blancs traités en surface dans ledit ou lesdits dispositifs de moulage,
l'application de chaleur et de pression (119) au ou aux blancs à l'intérieur du ou des dispositifs de moulage pendant une période de temps prédéterminée afin de former un ou plusieurs produits moulés (39),
l'éjection (121) du ou des produits moulés du ou des dispositifs de moulage ; ou,
ii) l'application (115') d'un agent de moulage liquide (33) comprenant une solution aqueuse d'agent d'aide à l'entrée du moule et/ou d'agent de démoulage sur la bande (15),
la formation (111) d'un ou plusieurs blancs (21) et d'un matériau en bande en excès (22') à partir de ladite bande de fibres traitée en surface enlevant les un ou plusieurs blancs de la bande,
le transport (113) du ou des blancs vers un ou plusieurs dispositifs de moulage,
le transport (117) du ou des blancs dans l'un ou plusieurs dits dispositifs de moulage,
l'application de chaleur et de pression (119) au ou aux blancs à l'intérieur du ou des dispositifs de moulage pendant une période de temps prédéterminée afin de former un ou plusieurs produits moulés,
l'éjection (121) du ou des produits moulés formés à partir du ou des dispositifs de moulage.

6. Procédé selon la revendication 5, **caractérisé en ce que** l'agent de moulage liquide (33) est constitué d'une solution aqueuse d'agent lubrifiant de moulage et/ou d'une solution aqueuse d'agent de démoulage, dans lequel les solides dissous dans l'agent de moulage liquide sont égaux ou inférieurs à 1,0 %, de préférence inférieurs ou égaux à 0,5 % et plus préférablement inférieurs à 0,1 % en poids de l'agent de moulage liquide.

7. Procédé selon l'une quelconque des revendications 5 ou 6, **caractérisé en ce que** l'étape d'application de l'agent de moulage liquide comprend l'application de l'agent de moulage liquide d'une quantité en moyenne transversale à la direction transversale de l'ébauche qui est supérieure ou égale à 100 grammes par mètre carré (g/m²) de bande et égale ou inférieure à 400 g/m² de bande, de préférence supérieure ou égale à 120 g/m² de bande et égale ou inférieure à 300 g/m² de bande, encore plus préférentiellement, elle est supérieure ou égale à 150 g/m² de bande et égale ou inférieure à 250 g/m² de bande.

8. Procédé selon l'une quelconque des revendications 5 à 7, **caractérisé en ce que** l'étape de fourniture (101) d'une matière première contenant des fibres de cellulose comprend la fourniture d'une matière première fibreuse, de préférence sous la forme d'au moins un rouleau de papier, qui a une valeur COBB selon TAPPI T411 pour du papier non-bibuleux, respectivement TAPPI T 432 pour papier absorbant qui étaient à jour le 1er janvier 2022, inférieur ou égal à 70 g/m², de préférence égale ou inférieure à 50 g/m², plus préférentiellement égale ou inférieure à 30 g/m ² , encore plus préférentiellement égale ou inférieure à 20 g/m² et le plus préférentiellement égale ou inférieure à 10 g/m² .

9. Procédé selon l'une quelconque des revendications 5 à 8, dans lequel ledit agent de moulage liquide comprend un agent facilitant l'entrée du moule et/ou un agent de démoulage.

10. Procédé selon la revendication 9, dans lequel ledit agent facilitant l'entrée du moule comprend une solution aqueuse de savon.

11. Procédé selon la revendication 10, dans lequel ledit savon est un savon à base végétale.

12. Procédé selon l'une quelconque des revendications 9 à 11, dans lequel ledit agent de démoulage comprend une solution aqueuse de prépolymère de silicium organique de 1 % à moins de 5 %, de 2-(2-butooxyéthoxy)éthanol supérieur à 0 % et inférieur ou égal à 1 % et d'acétate de zirconium supérieur ou égal à 1 % et égal ou inférieur à 3 %, le reste étant de l'eau.
